(19) **Europäisches Patentamt**

**European Patent Office**

**Office européen des brevets**

(11) **EP 1 602 683 A1**

(12) # EUROPEAN PATENT APPLICATION
published in accordance with Art. 158(3) EPC

(43) Date of publication:
**07.12.2005 Bulletin 2005/49**

(21) Application number: **04710546.5**

(22) Date of filing: **13.02.2004**

(51) Int Cl.[7]: **C08J 5/18**, C08J 7/04,
B29C 55/12, B32B 27/36,
G02B 1/04
// G02F1:1335,(C08L67/00,
B29K67:00, B29L11:00)

(86) International application number:
**PCT/JP2004/001529**

(87) International publication number:
**WO 2004/081090 (23.09.2004 Gazette 2004/39)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **11.03.2003 JP 2003064626
11.04.2003 JP 2003107528
18.06.2003 JP 2003173644
29.07.2003 JP 2003202936
08.08.2003 JP 2003289990
09.09.2003 JP 2003316570**

(71) Applicants:
• **Mitsubishi Polyester Film Corporation
Tokyo 108-0014 (JP)**

• **MITSUBISHI CHEMICAL CORPORATION
Tokyo 108-0014 (JP)**

(72) Inventor: **MASUDA, Narihiro,
c/o Central Research Laboratory
Maihara-shi, Shiga-ken (JP)**

(74) Representative: **ter Meer, Nicolaus
TER MEER STEINMEISTER & PARTNER GbR,
Patentanwälte,
Mauerkircherstrasse 45
81679 München (DE)**

(54) **BIAXIALLY ORIENTED POLYESTER FILM AND RELEASE FILM**

(57)      There is provided a biaxially oriented polyester film comprising a polyester which contains repeating units containing 1,4-cyclohexanedicarboxylic acid and 1,4-cyclohexanedimethanol as main components, and exhibits a melting point of not less than 200°C, wherein the biaxially oriented polyester film has a heat shrinkage percentage of not more than 5% as measured at 130°C in each of longitudinal and width directions thereof, and a total light transmittance of not less than 90%. The biaxially oriented polyester film of the present invention exhibits an excellent heat resistance notwithstanding the film is composed of an aliphatic polyester, and a good transparency inherent to the aliphatic polyester, and can be suitably used in optical applications.

EP 1 602 683 A1

**Description**

TECHNICAL FIELD

The present invention relates to a biaxially oriented polyester film, and more particularly, to a biaxially oriented polyester film which exhibits a good heat resistance despite being composed of an aliphatic polyester, as well as is excellent in transparency, adhesion strength, running workability, etc., and can be suitably used, in particular, in optical applications. In addition, the present invention relates to a release film using the biaxially oriented polyester film which is suitable for protecting an adhesive layer of optical parts such as a polarizing plate and a phase-difference plate used in liquid crystal displays.

BACKGROUND ART

Biaxially oriented polyester films such as typically polyethylene terephthalate films have been used in various applications because of an excellent balance between properties such as mechanical strength, heat resistance, chemical resistance, weather resistance, transparency, electric insulating property, etc.,and costs.

In general, almost all of polyesters used as raw materials of biaxially oriented films are aromatic polyesters containing an aromatic carboxylic acid such as terephthalic acid (and isophthalic acid) and naphthalenedicarboxylic acid in a molecular structure thereof. The most important reason therefor is considered to be that the polyester films composed of polyesters containing the aromatic carboxylic acid in monomer units thereof are enhanced in mechanical strength and heat resistance owing to increased rigidity of polyester molecules.

On the other hand, there are present a group of so-called aliphatic polyesters which have no aromatic ring-containing monomer units in a molecular structure thereof and are produced by polycondensation between an aliphatic dicarboxylic acid and an aliphatic glycol. The aliphatic polyesters have no rigid aromatic ring and, therefore, exhibit less mechanical strength and heat resistance unlike aromatic polyesters, so that it may sometimes be difficult to form these aliphatic polyesters into a biaxially oriented film.

However, there are known aliphatic polyesters which can be formed into a biaxially oriented film. More specifically, as such aliphatic polyesters, there are known only several kinds of compounds, i.e., polyethylene succinate and polybutylene succinate/adipate (for example, refer to Japanese Patent Application Laid-Open (KOKAI) No. 5-295068(1993)), and polylactic acid-based aliphatic polyesters (for example, refer to Japanese Patent Application Laid-Open (KOKAI) Nos. 7-207041(1995), 7-300520(1995), 2000-238122, 2000-238123 and 2000-238125) or the like.

Although the aliphatic polyesters tend to be deteriorated in heat resistance or mechanical strength as compared to aromatic polyesters, the properties thereof are important when used in certain applications and for certain objects. For example, as to the transparency, a total light transmittance of plastic materials having an aromatic ring in a molecule thereof such as polyethylene terephthalate films, polyethylene naphthalate, polystyrene film and polycarbonates is less than 90%. On the contrary, the total light transmittance of PMMA as a typical example of transparent plastic materials having no aromatic ring reaches 92 to 93%. In particular, in optical applications in which the transparency is a very important property, there are known only few biaxially oriented polyester films capable of exhibiting both a good heat resistance and a good transparency. In addition, the biaxially oriented polyester films are required to exhibit the following properties, and further have the following problems to be solved.

(1) In optical applications, the polyester films are used singly in some applications, but frequently subjected to post treatment and used in the form of a laminate including any functional layers. In this case, it is required to attain an excellent adhesion between the aliphatic polyester film as a base film and the functional layers laminated by the post treatment.

(2) In the case where the film is taken up into a roll product or the film is taken off from the roll for any treatment thereof, the film is required to have an appropriate slip property. Namely, the film which is insufficient in slip property tends to suffer from, for example, wrinkles or pimple upon formation of the film and winding of the film into a roll; failure to smoothly travel over a guide roll, etc, due to large friction thereagainst; and occurrence of scratches on the film even if it can be well traveled, resulting in poor workability.

Meanwhile, in general, in order to impart a good slip property to films, fine particles have been frequently added to the film to form fine projections thereon. However, when the kind of fine particles to be added is inappropriate or the fine particles are added in an inappropriate amount, the resultant films tend to be deteriorated in transparency and rather exhibit a poor slip property, thereby causing problems such as deterioration in running workability such as a winding property of the films.

(3) The biaxially oriented polyethylene terephthalate films (hereinafter referred to merely as "PET films") have been frequently used as a base film for transparent conductive laminates in the application fields requiring no optical isotropy (for example, refer to Japanese Patent Application Laid-Open (KOKAI) Nos. 6-332164(1994), 8-17268(1996), 8-244186(1996), 8-244187(1996) and 2001-135150). The reason therefor is considered to be that the PET films exhibit an excellent balance between properties such as mechanical strength, heat resistance, chemical resistance, weather resistance, transparency, electric insulating property, etc., and costs.

However, the PET films inevitably contain compounds having a low polymerization degree (oligomers) which are called cyclic trimers. It is known that the cyclic trimers tend to bleed out, upon heating, onto a surface of the film in the form of a white powder. For this reason, when the transparent conductive laminate using the PET film as a base film thereof is heated upon further treatments, the transparent conductive laminate tends to suffer from defects of appearance such as turbidity and white spots owing to bleed-out of the oligomers onto the surface of the film, as well as deterioration in conductivity.

To solve the above problems, there has been proposed a method of decreasing the oligomer content in the films by previously subjecting the PET resin to heat treatment at a temperature not lower than 180°C for 12 hours or more (for example, refer to Japanese Patent Application Laid-Open (KOKAI) No. 2001-135150). However, this method disadvantageously requires huge energy and costs for decreasing the oligomer content.

(4) In general, the polyester films are directly used as a single member in some applications, but frequently subjected to post treatments and used in the form of a laminate including any functional layers. Besides, a very large number of kinds of functional layers are used for the laminate. In this case, when the aliphatic polyester film is used as a base film of the laminate, there tends to arise such a problem that the adhesion strength between the base film and the functional layers laminated thereon upon the post treatments is poor.

(5) Upon the above post treatments, in the case where the polyester film is readily electrostatically charged, there tends to frequently arise such a problem that dust or dirt are adsorbed onto the surface of the film owing to a electrostatic charge generated thereon, resulting in contaminated surface of the film as well as defects due to foreign substances.

(6) Also, a polarizing plates or a phase difference plate used in liquid crystal displays (hereinafter referred to merely as "LCD") is provided on one surface thereof with an adhesive layer, and the adhesive layer is covered with a release film in the form of a protective film. Conventionally, as a base film of the release film, there have been frequently used the PET films (for example, refer to Japanese Patent Application Laid-Open (KOKAI) Nos. 2002-36476 and 2002-40250, and Japanese Patent No. 3320904). The reason therefor is considered to be that the PET films exhibit an excellent balance between properties such as mechanical strength, heat resistance, chemical resistance, weather resistance, transparency, electric insulating property, etc., and costs.

However, the PET films inevitably contain compounds having a low polymerization degree (oligomers) which are called cyclic trimers. It is known that the cyclic trimers tend to bleed out upon heating onto a surface of the film in the form of a white powder.

Further, according to the present inventors' knowledge, in many cases, most of the cyclic trimers bled out from the PET films tend to penetrate through a release layer laminated thereon and reach the surface of the release layer. Under such a condition, the cyclic trimers tend to be transferred into the adhesive layer laminated on the release layer, and still remain in the adhesive layer of a polarizing plate or the like even after removing the release film therefrom. If the polarizing plate or the like is laminated on, for example, a glass plate to produce an LCD, the resultant LCD tends to be deteriorated in luminance at the worst, resulting in defects of appearance such as white spots.

To solve the above problems, there have been proposed a method of decreasing an oligomer content in the PET films by previously subjecting a PET resin to heat treatment, for example, at a temperature not lower than 200°C for several hours (for example, refer to Japanese Patent Application Laid-Open (KOKAI) No. 2000-108252), and a method of providing a coating layer containing polyvinyl alcohol on the surface of the PET films (for example, refer to Japanese Patent Application Laid-Open (KOKAI) No. 2001-71420).

However, in the above heat-treating method, huge energy costs are required for decreasing the oligomer content in the PET films, whereas in the method of providing a coating layer containing polyvinyl alcohol on the surface of the PET films, properties of the coating layer tend to be readily varied by adverse influence of moisture because the coating layer containing polyvinyl alcohol exhibits a high water absorption.

The present invention has been conducted for solving the above problems. Objects of the present invention are as follows.

(1) A first object of the present invention is to provide a polyester film which has an excellent heat resistance notwithstanding the film is composed of an aliphatic polyester, and a good transparency inherent to the aliphatic polyester and can be suitably used in optical applications.

(2) A second object of the present invention is to provide a polyester film which has an excellent heat resistance notwithstanding the film is composed of an aliphatic polyester, a good transparency inherent to the aliphatic polyester, and an excellent running workability upon production and post treatments of the film, and can be suitably used, in particular, in optical applications.

(3) A third object of the present invention is to provide a biaxially oriented polyester film for transparent conductive laminates, which entirely overcomes various conventional problems due to oligomers produced upon heating.

(4) A fourth object of the present invention is to provide a polyester film which has an excellent heat resistance notwithstanding the film is composed of an aliphatic polyester, a good transparency inherent to the aliphatic polyester, and an excellent adhesion strength to functional layers laminated thereon upon post treatments, and can be suitably used, in particular, in optical applications.

(5) A fifth object of the present invention is to provide a biaxially oriented polyester film which has an excellent heat resistance notwithstanding the film is composed of an aliphatic polyester, and is less electrostatically charged.

(6) A sixth object of the present invention is to provide a release film which overcomes various problems due to oligomers produced upon heating.

## DISCLOSURE OF THE INVENTION

The above respective objects of the present invention can be accomplished by the following aspects (1) to (6) of the present invention:

(1) The first aspect of the present invention relates to a biaxially oriented polyester film comprising a polyester which contains repeating units containing 1,4-cyclohexanedicarboxylic acid and 1,4-cyclohexanedimethanol as main components, and exhibits a melting point of not less than 200°C, which biaxially oriented polyester film has a heat shrinkage percentage of not more than 5% as measured at 130°C in each of longitudinal and width directions thereof, and a total light transmittance of not less than 90%.

The first aspect of the present invention has been attained on the basis of the present inventors' finding that a biaxially oriented polyester film having an excellent heat resistance, is obtained from an aliphatic polyester having a specific composition and specific properties.

(2) The second aspect of the present invention relates to a biaxially oriented polyester film comprising a polyester which contains repeating units containing 1,4-cyclohexanedicarboxylic acid and 1,4-cyclohexanedimethanol as main components, and exhibits a melting point of not less than 200°C, which biaxially oriented polyester film has a haze of not more than 10%, and in which at least one surface of the biaxially oriented polyester film has a center line average roughness (Ra) of 7 to 35 nm.

The second aspect of the present invention has been attained on the basis of the present inventors' finding that a biaxially oriented polyester film which is excellent in heat resistance, transparency and running workability, is obtained from an aliphatic polyester having a specific composition and specific properties.

(3) The third aspect of the present invention relates to a biaxially oriented polyester film for transparent conductive laminates, comprising a polyester which contains repeating units containing 1,4-cyclohexanedicarboxylic acid and 1,4-cyclohexanedimethanol as main components, and exhibits a melting point of not less than 200°C, which biaxially oriented polyester film has an amount of change in haze of not more than 1% as measured after heating the film at 150°C for each of 1 hour and 4 hours.

The third aspect of the present invention has been attained on the basis of the present inventors' finding that a transparent conductive laminate is prevented from suffering from deterioration in transparency and conductivity by using as a base film thereof a biaxially oriented polyester film comprising an aliphatic polyester having a specific composition and specific properties.

(4) The fourth aspect of the present invention relates to a biaxially oriented polyester film comprising a polyester which contains repeating units containing 1,4-cyclohexanedicarboxylic acid and 1,4-cyclohexanedimethanol as main components, and exhibits a melting point of not less than 200°C, which biaxially oriented polyester film is provided on at least one surface thereof with a coating layer containing at least one resin selected from the group consisting of a polyester resin, an acrylic resin and a polyurethane resin, and in which the whole film including the coating layer has a total light transmittance of not less than 89%.

The fourth aspect of the present invention has been attained on the basis of the present inventors' finding that a biaxially oriented polyester film having an excellent heat resistance, is obtained from an aliphatic polyester having a specific composition and specific properties, and further when a coating layer having a specific composition is formed on the surface of the biaxially oriented polyester film, the adhesion strength between the film and functional layers to be laminated thereon by post treatments can be improved.

(5) The fifth aspect of the present invention relates to a biaxially oriented polyester film comprising a polyester which contains repeating units containing 1,4-cyclohexanedicarboxylic acid and 1,4-cyclohexanedimethanol as main components, and exhibits a melting point of not less than 200°C, which biaxially oriented polyester film is provided on at least one surface thereof with a coating layer having a surface resistivity of not more than $1 \times 10^{13}$ $\Omega$ and has a heat shrinkage percentage of not more than 5% as measured at 130°C in each of longitudinal and width directions thereof.

The fifth aspect of the present invention has been attained on the basis of the present inventors' finding that a film satisfying both an excellent heat resistance and a good antistatic property can be obtained by using a biaxially oriented polyester film which is composed of an aliphatic polyester having a specific composition and specific properties, and provided on at least one surface thereof with a coating layer having a specific surface resistivity.

(6) The sixth aspect of the present invention relates to a release film comprising a biaxially oriented polyester film comprising a polyester which contains repeating units containing 1,4-cyclohexanedicarboxylic acid and 1,4-cyclohexanedimethanol as main components, and exhibits a melting point of not less than 200°C; and a release layer laminated on at least one surface of the biaxially oriented polyester film, which release film has an amount of change in haze of not more than 1% as measured after heating the film at 150°C for 1 hour.

The sixth aspect of the present invention has been attained on the basis of the present inventors' finding that when a biaxially oriented polyester film composed of an aliphatic polyester having a specific composition and specific properties is used as a base material of a release film, and the release film is used for protecting an adhesive layer for a polarizing plate or a phase difference plate, these plates can be effectively prevented from suffering from defects of appearance due to oligomers.

## PREFERRED EMBODIMENTS FOR CARRYING OUT THE INVENTION

The present invention is described in detail below.

First, the polyesters used in the above respective aspects of the present invention are explained.

The polyester used for the biaxially oriented film of the present invention is a polycondensate having repeating units containing 1,4-cyclohexanedicarboxylic acid and 1,4-cyclohexanedimethanol as main components. The main components used herein means that the content of 1,4-cyclohexanedicarboxylic acid in dicarboxylic acid components is usually not less than 95 mol%, preferably not less than 98 mol%, and the content of 1,4-cyclohexanedimethanol in diol components is usually not less than 95 mol%, preferably not less than 98 mol%.

Also, the content of a trans isomer of the 1,4-cyclohexanedicarboxylic acid is usually not less than 80 mol%, preferably not less than 85 mol%, and the content of a trans isomer of the 1,4-cyclohexanedimethanol is usually not less than 60 mol%, preferably not less than 70 mol%.

When the constitutional ratios of the dicarboxylic acid components and the diol components are out of the above-specified ranges, the resultant polyester tends to exhibit a low melting point, thereby failing to satisfy the below-mentioned specific ranges defined by the present invention.

Examples of the other dicarboxylic acids usable within the above constitutional ratios of the dicarboxylic acid components may include a cis isomer of 1,4-cyclohexanedicarboxylic acid, 1,3-cyclohexanedicarboxylic acid, 1,2-cyclohexanedicarboxylic acid, oxalic acid, succinic acid, adipic acid, azelaic acid, sebacic acid and decanedicarboxylic acid. Examples of the other diols usable within the above constitutional ratios of the diol components may include a cis isomer of 1,4-cyclohexanedimethanol, 1,3-cyclohexanedimethanol, 1,2-cyclohexanedimethanol, ethyleneglycol, propyleneglycol, butanediol, neopentylglycol, pentanediol and hexanediol.

The polyester used in the present invention is required to have a melting point of not less than 200°C, preferably not less than 210°C. The upper limit of the melting point is usually 245°C. When the melting point of the polyester is less than 200°C, the polyester tends to be insufficient in heat resistance, and a heat-setting temperature of the film obtained after biaxial stretching cannot be set to a high temperature, resulting in a high shrinkage percentage of the obtained biaxially oriented film.

Also, the polymerization degree of the polyester is controlled such that an intrinsic viscosity thereof as measured at 30°C in a mixed solvent containing phenol and tetrachloroethane at a weight ratio of 1:1 is usually not less than 0.55, preferably not less than 0.80. The polyester satisfying such a condition is enhanced in continuity upon the film formation process, and the resultant film is enhanced in mechanical strength. The upper limit of the intrinsic viscosity of the polyester is usually 1.50.

The polyester used in the present invention may contain fine particles for the purpose of imparting a good slip property to the resultant film by forming fine protrusions on the surface of the film upon stretching. The fine particles are preferably appropriately selected from those particles affecting substantially no adverse effects on a transparency of the resultant polyester film, such as inorganic particles, organic salt particles and crosslinked polymer particles.

Specific examples of the inorganic particles may include particles of calcium carbonate, magnesium carbonate, barium carbonate, calcium sulfate, calcium phosphate, magnesium phosphate, aluminum oxide, silicon oxide, lithium fluoride, kaolin, talc, etc. Specific examples of the organic salt particles may include particles of calcium oxalate, terephthalic acid salts such as calcium terephthalate, magnesium terephthalate and barium terephthalate, etc. Specific examples of the crosslinked polymer particles may include particles of crosslinked polystyrene resins, crosslinked acrylic resins, crosslinked polyester resins and copolymers thereof as well as particles of thermosetting resins such as epoxy resins, urea resins and phenol resins, fluorine-containing resins, etc. These fine particles may be used singly or in the form of a mixture of any two or more thereof.

The fine particles have an average particle diameter of usually 0.05 to 5 $\mu$m, preferably 0.1 to 3 $\mu$m. The amount of the fine particles added to the film is usually 0.005 to 2% by weight, preferably 0.01 to 1% by weight. In addition, a predetermined amount of the fine particles may be initially added to the aliphatic polyester, or a high concentration master batch of the fine particles as previously prepared may be diluted with a polyester containing no fine particles so as to produce a polyester containing a desired amount of the fine particles.

In the present invention, as an alternative method for imparting a slip property to the resultant film, there may also used the method of forming a coating layer containing the fine particles on at least one surface of the film. Such a coating layer may be produced, for example, by a so-called in-line coating method in which the above fine particles are added to a binder resin such as water-soluble or water-dispersible acrylic resins, polyurethane resins and polyester resins to prepare a coating solution using water as a main solvent, and the resultant coating solution is applied onto the film before completing orientation crystallization thereof, followed by stretching the film at least in one direction and allowing the film to be heat-set. In this case, the average particle diameter of the fine particles is usually 0.005 to 0.3 $\mu$m, preferably 0.01 to 0.2 $\mu$m, and the concentration of the fine particles in the resultant coating layer is 1 to 10% by weight.

The polyester film of the present invention may also contain, in addition to the fine particles, any known additives unless deviating from the scope of the present invention. Examples of the additives may include antioxidants, heat stabilizers, antistatic agents, lubricants, flame retardants, etc. These additives may be directly added to the polyester similarly to the fine particles, or there may also be used a high concentration master batch of the respective additives.

The polyester film of the present invention is in the form of neither an unstretched film nor a monoaxially stretched film, and in the form of a biaxially oriented polyester film which is stretched in both longitudinal and width directions and then heat-set.

<u>＜First aspect of the invention＞</u>

The biaxially oriented polyester film according to the first aspect of the present invention is constituted by the above polyester, and has a heat shrinkage percentage of not more than 5% as measured at 130°C in each of longitudinal and width directions thereof, and a total light transmittance of not less than 90%.

The biaxially oriented polyester film according to the first aspect of the present invention is required to exhibit a heat shrinkage percentage of not more than 5%, preferably not more than 4% as measured at 130°C in each of longitudinal and width directions thereof. When the heat shrinkage percentage of the film is more than 5%, the film tends to suffer from severe shrinkage due to heat applied upon the post treatments such as had coat-forming treatment, resulting in disadvantages such as distortion or wrinkles of the obtained film.

The biaxially oriented polyester film according to the first aspect of the present invention is also required to exhibit a total light transmittance of not less than 90%, preferably not less than 91%. When the total light transmittance of the film is less than 90%, an excellent transparency inherent to the aliphatic polyester tends to be undesirably lost.

The thickness of the biaxially oriented polyester film according to the first aspect of the present invention is not particularly limited, and is usually 15 to 300 $\mu$m.

In the preferred embodiment of the first aspect of the present invention, at least one surface of the biaxially oriented polyester film exhibits a wetting index of usually not less than 48 mN/m, preferably not less than 50 mN/m. When the wetting index of the surface of the biaxially oriented polyester film is less than 48 mN/m, for example, upon subjecting the surface of the film to a hard coat-forming treatment, etc, there tends to arise such a problem that the thus formed coat is readily peeled off from the surface of the polyester film owing to insufficient adhesion strength therebetween. As the method of causing the surface of the film to exhibit a wetting index of not less than 48 mN/m, there may be used a corona treatment, a plasma treatment, etc. These treatments may be conducted against not only one surface of the film but also both surfaces thereof.

In the biaxially oriented polyester film according to the first aspect of the present invention, at least one of the surfaces of the film having a wetting index of not less than 48 mN/m may be provided with a hard coat layer. The hard coat layer may be made of a known resin composition which contains a polyacrylic acid derivative or a polymethacrylic acid derivative and is curable upon a crosslinking reaction accelerated by heat treatment or irradiation of activation rays such as ultraviolet ray and electron beam. Although the thickness and hardness of the hard coat layer are not particularly limited, the thickness thereof is usually 0.1 to 5 $\mu$m, whereas the hardness thereof is about HB to 5H calculated as a pencil hardness.

<u>＜Second aspect of the invention＞</u>

The biaxially oriented polyester film according to the second aspect of the present invention is constituted by the above polyester, and having a film haze of not more than 10%, in which at least one surface of the film has a center line average roughness (Ra) of 7 to 35 nm.

In the polyester film according to the second aspect of the present invention, it is required that owing to the fine particles added thereto as described above, at least one surface of the film has a center line average roughness (Ra) of 7 to 35 nm, preferably 10 to 30 nm, more preferably 12 to 25 nm. When the center line average roughness (Ra) of the surface of the film is more than 35 nm, the haze of the film tends to become too high to satisfy the below-mentioned preferred range of the film haze. On the other hand, when the center line average roughness (Ra) of the surface of the film is less than 7 nm, the film tends to be insufficient in slip property, resulting in poor running workability.

The polyester film according to the second aspect of the present invention may be in the form of a single layer film as a layer structure in the thickness direction thereof, or a co-extruded film obtained by laminating at least two layers, preferably three or more layers together upon melt extrusion. In particular, in the layer structure having three or more layers, the film includes two surface layers on opposite surfaces of the film, and an intermediate layer interposed therebetween. The intermediate layer itself may have a laminated structure. However, in any cases, it is required that all of polyesters constituting the respective layers of the laminated film satisfy the specific melting point range as described above.

In the case where the polyester film according to the second aspect of the present invention has a two layer structure including a surface layer A and another surface layer B, when the surface layer A contains fine particles and exhibits a center line average roughness (Ra) of 7 to 35 nm, another surface layer B may or may not contain the fine particles. When another surface layer B also contains the fine particles, the amount of the fine particles contained in another surface layer B is usually not more than 1/2 time, preferably not more than 1/5 time that contained in the surface layer A. The thickness of the surface layer A is not particularly limited, and usually 1 to 10 $\mu$m.

In the case where the polyester film according to the second aspect of the present invention has a three or more layer structure including opposite surface layers A and A' and an intermediate layer B (inclusive of the case where the intermediate layer itself has a laminated structure), at least one of the surface layers A and A', preferably both thereof, contain the above fine particles, and exhibit a center line average roughness (Ra) of 7 to 35 nm. When both of the surface layers A and A' contain the fine particles, the kind, particle diameter and amount of fine particles contained in the surface layer A are preferably the same as those of fine particles contained in the surface layer A'. Although the intermediate layer B may or may not contain the fine particles, when the intermediate layer B contains the fine particles, the amount of the fine particles contained in the intermediate layer B is usually not more than 1/2 time, preferably not more than 1/5 time an amount of the fine particles contained in the surface layer A and/or the surface layer A'. In particular, as the polyester for the intermediate layer B, there may be reused trimmed ends or strips of the polyester film. Also, the thickness of each of the surface layers A and A' is not particularly limited, and usually 1 to 10 $\mu$m. The thickness of the surface layer A may be the same as or different from that of the surface layer A'.

Although the polyester film according to the second aspect of the present invention may have either a single layer structure or a laminated structure, it is required that the haze of the polyester film is not more than 10%, preferably not more than 6%, more preferably not more than 4%. In this case, the lower limit of the film haze is usually 0.5%. When the film haze is more than 10%, the film tends to suffer from turbidity, and a transparency thereof tends to be apparently deteriorated even by visual observation.

The polyester film according to the second aspect of the present invention exhibits a heat shrinkage percentage of usually not more than 5%, preferably not more than 4% as measured at 130°C in each of longitudinal and width directions thereof. When the heat shrinkage percentage of the film is more than 5%, the film tends to suffer from severe shrinkage due to heat applied upon the post treatments such as had coat-forming treatment, resulting in disadvantages such as distortion or wrinkles of the obtained film.

In the polyester film according to the second aspect of the present invention, at least one surface of the polyester film exhibits a wetting index of usually not less than 48 mN/m, preferably not less than 50 mN/m. When the wetting index of the surface of the polyester film is less than 48 mN/m, for example, upon subjecting the surface of the film to a hard coat-forming treatment, etc, there tends to arise such a problem that the thus formed coat is readily peeled off from the surface of the polyester film owing to insufficient adhesion strength therebetween. As the method of causing the surface of the film to exhibit a wetting index of not less than 48 mN/m, there may be used a corona treatment, a plasma treatment, etc. As a matter of course, these treatments may be conducted against not only one surface of the film but also both surfaces thereof.

<u><Third aspect of the invention></u>

The biaxially oriented polyester film for transparent conductive laminates according to the third aspect of the present invention is constituted by the above polyester, and has an amount of change in haze of not more than 1% as measured after heating the film at 150°C for each of 1 hour and 4 hours.

Although the biaxially oriented polyester film according to the third aspect of the present invention is imparted with a good slip property by various methods as described above, in any cases, the resultant biaxially oriented polyester film exhibits a film haze of usually not more than 4%, preferably not more than 3%, more preferably not more than 2%. Meanwhile, the lower limit of the film haze value of the polyester film is usually 0.2%.

The biaxially oriented polyester film according to the third aspect of the present invention may be in the form of either a single layer film as a layer structure in the thickness direction thereof, or a co-extruded film obtained by laminating two or more layers together upon melt extrusion. In particular, in the case of the biaxially oriented polyester film with a laminated structure having three or more layers, when the fine particles are added to only the surface layers and no fine particles are added to the intermediate layer, the resultant film can be improved in slip property without deterioration in transparency thereof. However, it is required that all of polyesters constituting the respective layers of the laminated film satisfy the specific melting point range as described above.

In the biaxially oriented polyester film according to the third aspect of the present invention, it is required that the amount of change in film haze value thereof is not more than 1% as measured after heating the film at 150°C for each of 1 hour and 4 hours. The amount of change in film haze of the polyester film is preferably not more than 0.5%, more preferably not more than 0.2%. When the amount of change in film haze of the polyester film is more than 1%, upon comparison between conditions of the film before and after the heat treatment, the film after the heat treatment tends to show a turbidity as apparently recognized even by visual observation and, therefore, tends to be deteriorated in transparency.

The biaxially oriented polyester film according to the third aspect of the present invention exhibits a heat shrinkage percentage of usually not more than 5%, preferably not more than 4%, more preferably not more than 3% as measured at 130°C in each of longitudinal and width directions thereof. When the heat shrinkage percentage of the film is more than 5%, the film tends to suffer from severe heat shrinkage due to heat applied upon laminating a transparent conductive film thereon or upon the post treatments such as hard coat-forming treatment and circuit-forming treatment, resulting in disadvantages such as distortion or wrinkles of the obtained film.

The biaxially oriented polyester film according to the third aspect of the present invention exhibits a total light transmittance of not less than 89%, preferably not less than 90% even when the film is provided with a coating layer formed by the below-mentioned in-line coating method.

In the biaxially oriented polyester film according to the third aspect of the present invention, one or both surfaces thereof may be subjected to surface treatments such as corona treatment and plasma treatment. These surface treatments enable the film to exhibit a wetting index of usually not less than 48 mN/m, preferably not less than 50 mN/m.

The thickness of the biaxially oriented polyester film according to the third aspect of the present invention is not particularly limited, and is usually 50 to 260 μm, preferably 100 to 200 μm.

In the biaxially oriented polyester film according to the third aspect of the present invention, when the below-mentioned transparent conductive film is laminated on only one surface thereof, a hard coat layer may be formed on another surface thereof. Such hard coat layer may be composed of a known resin composition which contains a polyacrylic acid derivative or a polymethacrylic acid derivative and is curable upon a crosslinking reaction accelerated by heat treatment or irradiation of activation rays such as ultraviolet ray and electron beam. Although the thickness and hardness of the hard coat layer are not particularly limited, the thickness thereof is usually 0.5 to 10 μm, whereas the hardness thereof is about H to 5H calculated as a pencil hardness.

The biaxially oriented polyester film according to the third aspect of the present invention can provide a transparent conductive laminate obtained by laminating a transparent conductive film on at least one surface of the polyester film.

The above transparent conductive film is not particularly limited as long as the conductive film has both of a good transparency and a good conductivity. Typical examples of the transparent conductive film may include thin films composed of indium oxide, indium-tin composite oxide (ITO), tin oxide, tin-antimony composite oxide (ATO), zinc oxide, zinc-aluminum composite oxide, indium-zinc composite oxide, etc. These compounds can exhibit both a good transparency and a good conductivity by appropriately selecting the production conditions thereof. In this case, the thickness of the transparent conductive film is usually 5 to 800 nm, preferably 10 to 500 nm. In addition, the transparent conductive film has a surface resistivity of usually 10 to 50000 Ω/□, and the transparent conductive laminate has a total light transmittance of usually not less than 80%, preferably not less than 85%.

It is known that the transparent conductive film may be produced by a vacuum deposition method, a sputtering method, a CVD method, an ion-plating method, a spraying method, etc. These methods are appropriately selected according to kinds of materials to be used as well as the film thickness required. For example, as the sputtering method, there may be used an ordinary sputtering method using a compound target, a reaction sputtering method using a metal target, etc. In these methods, a reactive gas such as oxygen, nitrogen and water vapor may be introduced, or additional methods such as addition of ozone and ion assist may be use in combination.

The thus produced transparent conductive laminate may be used as transparent electrodes for touch panels, electroluminescent panels, etc., as well as antistatic films, electromagnetic shielding films and heat-shielding films having a good transparency.

<Fourth aspect of the invention>

The biaxially oriented polyester film according to the fourth aspect of the present invention is constituted by the above polyester, and is provided on at least one surface thereof with a coating layer containing at least one resin selected from the group consisting of a polyester resin, an acrylic resin and a polyurethane resin, in which the whole film including the coating layer exhibits a total light transmittance of not less than 89%.

It is required that the biaxially oriented polyester film according to the fourth aspect of the present invention is provided on at least one surface thereof with a coating layer containing at least one resin (binder resin) selected from the group consisting of a polyester resin, an acrylic resin and a polyurethane resin. The above respective resins are defined herein as those which also include derivatives of these resins. Here, the "derivatives" mean copolymers with other resins as well as modified resins obtained by reacting functional groups of these resins with a reactive compound. These binder resins are usually used in combination with a crosslinking agent. Also, as described hereinafter, when a coating solution of these resins using water as a main solvent is applied to the film during the film-forming process, the resin components forming the coating layer may be used in the form of an aqueous solution thereof or an emulsion obtained by dispersing the resin components in water.

Examples of the components constituting the above polyester resin may include the following polycarboxylic acids and polyhydroxy compounds. That is, specific examples of the polycarboxylic acids may include terephthalic acid, isophthalic acid, phthalic acid, 4,4'-diphenyldicarboxylic acid, 2,5-naphthalenedicarboxylic acid, 2,6-naphthalenedicarboxylic acid, 1,4-cyclohexanedicarboxylic acid, 2-potassium-sulfoterephthalic acid, 5-sodium-sulfoisophthalic acid, adipic acid, azelaic acid, sebacic acid, dodecanedicarboxylic acid, glutaric acid, succinic acid, trimellitic acid, trimesic acid, trimellitic anhydride, phthalic anhydride, p-hydroxybenzoic acid, mono-potassium salt of trimellitic acid, ester-forming derivatives thereof, or the like. Specific examples of the polyhydroxy compounds may include ethyleneglycol, 1,2-propyleneglycol, 1,3-propyleneglycol, 1,3-propanediol, 1,4-butanediol, 1,6-hexanediol, 2-methyl-1,5-pentanediol, neopentylglycol, 1,4-cyclohexanedimethanol, p-xylyleneglycol, adducts of bisphenol A with ethyleneglycol, diethyleneglycol, triethyleneglycol, polyoxyethyleneglycol, polyoxypropyleneglycol, polyoxytetramethyleneglycol, dimethylolpropionic acid, glycerol, trimethylolpropane, sodium dimethylolethylsulfonate, potassium dimethylolpropionate, or the like. The polyester resin may be produced by known polycondensation reaction methods.

Upon preparing the polyester resin-containing coating solution using water as a main solvent, the polyester resin may be forcibly dispersed in water using a surfactant, etc. The polyester resin is preferably in the form of a self-dispersible resin having a hydrophilic nonionic component such as polyethers or a cationic group such as quaternary ammonium salts, and is more preferably a water-soluble or water-dispersible polyester resin containing an anionic group.

The polyester resin containing an anionic group means such a resin obtained by bonding an anionic group-containing compound to a polyester by copolymerization or graft polymerization. The anionic group may be appropriately selected from sulfonic acid, carboxylic acid, phosphoric acid, lithium salts thereof, sodium salts thereof, potassium salts thereof or ammonium salts thereof, etc. In this case, the amount of the anionic group contained in the polyester resin is usually 0.05 to 8% by weight. When the content of the anionic group in the polyester resin is less than 0.05% by weight, the resultant polyester-based resin tends to be deteriorated in water solubility or water dispersibility. When the content of the anionic group in the polyester resin is more than 8% by weight, the obtained coating layer tends to be deteriorated in water resistance, and the films tend to be bonded to each other due to moisture absorption thereof.

The above acrylic resins mean polymers produced from a polymerizable monomer having a carbon-to-carbon double bond such as typically acrylic or methacrylic monomers. These acrylic resins may be in the form of either a homopolymer or a copolymer. Also, there may be used copolymers of these acrylic resins with the other polymers such as polyesters and polyurethanes. Examples of the copolymers may include block copolymers and graft copolymers.

Further, the above acrylic resins also involve polymers (in some cases, a mixture of these polymers) obtained by polymerizing a polymerizable monomer having a carbon-to-carbon double bond in a polyester solution or a polyester dispersion. In addition, the above acrylic resins further involve polymers (in some cases, a mixture of these polymers) obtained by polymerizing a polymerizable monomer having a carbon-to-carbon double bond in a polyurethane solution or a polyurethane dispersion, as well as polymers (in some cases, a mixture of these polymers) obtained by polymerizing a polymerizable monomer having a carbon-to-carbon double bond in the other polymer solution or the other polymer dispersion.

The polymerizable monomer having a carbon-to-carbon double bond is not particularly limited. As specific typical examples of the monomer compound, there are exemplified various carboxyl-containing monomers such as acrylic acid, methacrylic acid, crotonic acid, itaconic acid, fumaric acid, maleic acid and citraconic acid, and salts thereof; various hydroxyl-containing monomers such as 2-hydroxyethyl (meth)acrylate, 2-hydroxypropyl (meth)acrylate, 4-hydroxybutyl (meth)acrylate, monobutylhydroxy fumarate and monobutylhydroxy itaconate; various (meth)acrylic esters such as methyl (meth)acrylate, ethyl (meth)acrylate, propyl (meth)acrylate, butyl (meth)acrylate and lauryl (meth)acrylate; various nitrogen-containing vinyl-based monomers such as (meth)acrylamide, diacetone acrylamide, N-methylol acrylamide and (meth)acrylonitrile; various styrene derivatives such as styrene, α-methyl styrene, divinyl benzene, vinylbenznesulfonic acid and vinyl toluene; various vinyl esters such as vinyl acetate and vinyl propionate; various silicon-containing polymerizable monomers such as γ-methacryloxypropyl trimethoxysilane, vinyl trimethoxysilane and "SAILAPRENE FM-07" (methacryloyloxy silicon macromer) produced by Chisso Co., Ltd.; phosphorus-containing vinyl-based monomers; various vinyl halides such as vinyl chloride, vinylidene chloride, vinyl fluoride, vinylidene fluoride, trifluorochloroethylene, tetrafluoroethylene, chlorotrifluoroethylene and hexafluoropropylene; and various conjugated dienes such as butadiene.

The polymerization initiator used in the polymerization reaction of the above monomers is not particularly limited. As typical examples of the compounds as the polymerization initiator, there are exemplified various inorganic peroxides such as ammonium persulfate and hydrogen peroxide; and various organic peroxides, e.g., various acyl peroxides such as benzoyl peroxide and lauroyl peroxide, various alkyl hydroperoxides such as t-butyl hydroperoxide and various dialkyl peroxides such as di-t-butyl peroxide; as well as other organic peroxides, e.g., various azo-based compounds such as azobisisobutyronitrile and azo-di-t-butane.

The above organic or inorganic peroxides may be used in combination with a reducing agent as so-called redox-based catalysts. In this case, the respective components of the catalyst may be composed of a single compound or the combination of a plurality of compounds. Typical examples of the compounds used as the above reducing agent may include ferrous salts, cuprous salts, sodium sulfite, sodium thiosulfate, mercaptan, sulfinic acid, organic amines, L-ascorbic acid, L-sorbic acid, etc.

The production of the polymers from the above acrylic monomers may be performed by an ordinary method. For example, various monomers and polymerization initiators described above are mixed with an organic solvent, and the resultant mixture is heated under stirring to conduct the polymerization. Alternatively, while heating and stirring the organic solvent, various monomers and polymerization initiators described above may be dropped thereinto, or the organic solvent, and various monomers and polymerization initiators described above are placed in an autoclave to conduct the polymerization under a high pressure. Further, there may also be used emulsion polymerization method, suspension polymerization method, soap-free polymerization method, etc., in which water is used instead of the organic solvent and, if desired, in combination with an emulsifier or a surfactant.

The above acrylic resins which are used for preparation of a coating solution using water as a main solvent, are such acrylic resins which contain hydrophilic group-containing monomer units such as acrylic acid, methacrylic acid, acrylamide, vinylbenzenesulfonic acid and salts thereof therein in order to impart a water solubility or a water dispersibility thereto, and are synthesized by emulsion polymerization method, suspension polymerization method, soap-free polymerization method, etc.

As the above polyurethane resins, there may be used known polyurethane resins as described in Japanese Patent Publication (KOKOKU) Nos. 42-24194(1967), 46-7720(1971), 46-10193(1971) and 49-37839(1974), Japanese Patent Application Laid-Open (KOKAI) Nos. 50-123197(1975), 53-126058(1978) and 54-138098(1979), etc., as well as polyurethane resins similar to these known polyurethane resins.

Examples of the polyisocyanate may include tolylene diisocyanate, phenylene diisocyanate, 4,4'-diphenylmethane diisocyanate, hexamethylene diisocyanate, xylylene diisocyanate, 4,4'-dicyclohexylmethane diisocyanate and isophorone diisocyanate.

Examples of the polyol may include polyether polyols such as polyoxyethyleneglycol, polyoxypropyleneglycol and polyoxytetramethyleneglycol; polyester polyols such as polyethylene adipate, polyethylene-butylene adipate and polycaprolactone; acrylic polyols; polycarbonate-based polyols; castor oils; etc. Usually, there may be suitably used those polyols having a molecular weight of 300 to 20000.

Examples of the chain extender or crosslinking agent may include ethyleneglycol, propyleneglycol, butanediol, diethyleneglycol, trimethylolpropane, hydrazine, ethylenediamine, diethylenetriamine, 4,4'-diaminodiphenyl methane and 4,4'-diaminodicyclohexyl methane.

The above urethane resins preferably contain anionic substituent groups such as sulfonic group, carboxyl group and phosphoric group as well as ammonium salts, alkali metal salts and alkali earth metal salts of these groups for the purpose of enhancing a solubility in a solvent containing water as a main component. Such urethane resins may be produced, for example, by the following methods (1) to (3).

(1) Production method of using a compound such as polyisocyanates, polyols, chain extenders, etc., which have an anionic substituent group.

For example, the polyisocyanates having an anionic substituent group may be produced by sulfonating an aromatic isocyanate compound. Also, there may be used isocyanate compounds containing salts of sulfuric esters of aminoalcohols or salts of diaminocarboxylic acids.

(2) Production method of reacting the compound having an anionic substituent group with an unreacted isocyanate group of the polyurethane as produced.

As the compound having an anionic substituent group, there may be used, for example, such compounds containing as the anionic substituent group, bisulfites, aminosulonic acid and salts thereof, aminocarboxylic acid and salts thereof, sulfuric esters of aminoalcohols and salts thereof, and hydroxyacetic acid and salts thereof.

(3) Production method of reacting an active hydrogencontaining group (such as OH and COOH) of the polyurethane with a specific compound.

As the specific compound, there may be used dicarboxylic anhydrides, tetracarboxylic anhydrides, sultones, lactones, epoxycarboxylic acids, epoxysulfonic acids, 2,4-dioxo-oxazolidine and isatinic anhydrides.

The content of the anionic group in the polyurethane resin is usually 0.05 to 8% by weight. When the content of the anionic group is less than 0.05% by weight, the polyurethane resin tends to be deteriorated in water solubility or water dispersibility. When the content of the anionic group is more than 8% by weight, the obtained coating layer tends to be deteriorated in water resistance, and the films tend to be bonded to each other owing to moisture absorption thereof.

The above polyester resins, acrylic resins and polyurethane resins have a glass transition temperature (Tg) of usually not less than -5°C, preferably not less than 0°C. When Tg is less than -5°C, the coating layer tends to be deteriorated in heat-resistant adhesion strength, or the coating layers tend to be fixedly bonded to each other, i.e., suffer from blocking phenomenon. Also, in the case where the coating layer is formed by the below-mentioned in-line coating method during the film-forming process, the upper limit of Tg is preferably the monoaxial stretching temperature of the polyester film as a base material plus 10°C, more preferably the monoaxial stretching temperature plus 5°C. When Tg exceeds the monoaxial stretching temperature plus 10°C, the degree of stretching of the coating layer may not follow and correspond to the degree of stretching of the base film, thereby failing to form a uniform coating layer in some cases.

The coating layer formed on the biaxially oriented polyester film according to the fourth aspect of the present invention is required to contain at least one resin selected from the group consisting of the above polyester resins, acrylic resins and polyurethane resins. In particular, the selective use of two or more kinds of these resins is more preferred, since various materials can be advantageously used as objects to be bonded thereto.

The crosslinking agent used together with the above binder resins has an effect of enhancing a durability, a heat resistance, an adhesion strength and an anchoring resistance of the obtained coating layer. The crosslinking agent is preferably capable of causing a crosslinking reaction with a functional group present in the binder resins such as carboxyl group, hydroxyl group, methylol group and amino group, upon heating.

Examples of the above crosslinking agent may include melamine-based crosslinking agents, epoxy-based crosslinking agents, oxazoline-based crosslinking agents, isocyanate-based crosslinking agents and aziridine-based crosslinking agents as well as resins obtained by bonding these crosslinking agents to polymer chains. Among these crosslinking agents, in view of a good compatibility with the binder resins and a good adhesion strength, preferred are melamine-based crosslinking agents, epoxy-based crosslinking agents, oxazoline-based crosslinking agents and resins obtained by bonding these crosslinking agents to polymer chains. The crosslinking agents used may be selected from water-soluble or water-dispersible ones.

The amount of the crosslinking agent blended in the coating layer is usually 1 to 50% by weight, preferably 5 to 30% by weight. When the amount of the crosslinking agent blended is less than 1% by weight, the crosslinking agent may fail to exhibit a sufficient effect. When the amount of the crosslinking agent blended is more than 50% by weight, the resultant coating layer may fail to exhibit a sufficient adhesion strength.

In the fourth aspect of the present invention, in order to improve a slip property and a bonding property of the obtained film, the coating layer preferably contains inorganic particles or organic particles. Examples of the inorganic particles may include particles of silicon dioxide, alumina, zirconium oxide, kaolin, talc, calcium carbonate, etc. Among these inorganic particles, silicon oxide particles are more conveniently usable in the consideration of inexpensiveness and availability of particles having various particle sizes. Examples of the organic particles may include particles of polystyrene, polyacrylate and polymethacrylate which have a crosslinking structure obtained from compounds containing two or more carbon-to-carbon double bonds in a molecule thereof such as divinyl benzene.

The amount of the particles blended in the coating layer is usually 0.5 to 10% by weight, preferably 1 to 5% by weight. When the amount of the particles blended is less than 0.5% by weight, the coating layer tends to be insufficient in anti-blocking property. When the amount of the particles blended is more than 10% by weight, the resultant film tends to be deteriorated in transparency.

Further, the coating layer may also contain, in addition to the above particles, an antistatic agent, a defoaming agent, a coating modifier, a thickening agent, an antioxidant, etc.

Also, the coating solution may contain a small amount of organic solvents for the purpose of improving a dispersibility of the coating layer components in water and a film-forming property of the coating layer as long as water is still used as a main solvent of the solution. In this case, it is required that the organic solvents are used in such a range as to be dissolvable in water.

Examples of the organic solvents may include aliphatic or alicyclic alcohols such as n-butyl alcohol, n-propyl alcohol, isopropyl alcohol, ethyl alcohol and methyl alcohol; glycols such as propyleneglycol, ethyleneglycol and diethyleneglycol; glycol derivatives such as n-butyl cellosolve, ethyl cellosolve, methyl cellosolve and propyleneglycol monomethyl ether; ethers such as dioxane and tetrahydrofuran; ketones such as methyl ethyl ketone and acetone; and amides such as dimethylformamide and N-methyl pyrrolidone. These organic solvents may be used in combination of any two or more thereof, if required.

The coating layer is preferably produced by a so-called in-line coating method of applying a coating solution containing the above resins and using water as a dispersing medium onto one or both surfaces of the polyester film before completion of crystallization orientation thereof during the polyester film-forming process, and then stretching the resultant film in at least one direction, followed by thermally fixing the stretched film. Such an in-line coating method is excellent in productivity, and achieves a strong adhesion between the coating layer and the polyester film.

The coating solution may be applied by using various coating apparatuses such as a reverse roll coater, a gravure coater, a rod coater, an air-doctor blade coater or other coaters as described in HARAZAKI Yuji "Coating Method" published by Maki Shoten, 1979.

When the coating layers are provided on both surfaces of the polyester film, the coating layers may be the same or different from each other. In order to improve a coatability of the coating layer or an adhesion strength thereof to the film, the film before applying the coating solution thereonto may be subjected to chemical treatments or corona discharge treatment. Further, the film after forming the coating layer thereon may be further subjected to corona discharge treatment in order to improve surface properties of the resultant film.

The thickness of the coating layer is not particularly limited, and usually 0.01 to 5 µm, preferably 0.02 to 2 µm, more preferably 0.05 to 0.5 µm. When the thickness of the coating layer is less than 0.01 µm, the obtained coating layer may fail to exhibit a sufficient function thereof.

The biaxially oriented polyester film according to the fourth aspect of the present invention which includes the coating layer formed on one or both surfaces thereof is required to exhibit a total light transmittance of not less than 89%, preferably not less than 90%. When the total light transmittance of the film is less than 89%, the resultant film may fail to show an excellent transparency inherent to the aliphatic polyester.

The thickness of the biaxially oriented polyester film according to the fourth aspect of the present invention is not particularly limited, and is usually 15 to 300 µm.

The biaxially oriented polyester film according to the fourth aspect of the present invention exhibits a heat shrinkage percentage of preferably not more than 5%, more preferably not more than 4% as measured at 130°C in each of longitudinal and width directions thereof. When the heat shrinkage percentage is more than 5%, the film tends to suffer from severe shrinkage due to heat applied upon post treatments such as hard coat-forming treatment, resulting in disadvantages such as distortion or wrinkles of the resultant film.

The biaxially oriented polyester film according to the fourth aspect of the present invention may be provided on the surface of at least one coating layer thereof with a hard coat layer. The hard coat layer may be composed of a known resin composition which contains a polyacrylic acid derivative or a polymethacrylic acid derivative and is curable upon a crosslinking reaction accelerated by heat treatment or treatment with activation rays such as ultraviolet ray and electron beam. Although the thickness and hardness of the hard coat layer are not particularly limited, the thickness thereof is usually 0.1 to 5 µm, whereas the hardness thereof is about HB to 5H calculated as a pencil hardness.

Further, the coating layer formed on at least one surface of the biaxially oriented polyester film according to the fourth aspect of the present invention exhibits a good adhesion strength to not only the above hard coat layer but also various functional layers used in extremely extensive applications. Specific examples of such functional layers may include a photosensitive layer, an ink accepting layer for ink-jet printing, a printing ink layer, an UV ink layer and a vacuum deposition layer composed of metals, inorganic substances or oxides thereof, as well as various thin film layers obtained by electron beam deposition, sputtering, ion-plating, plasma polymerization, CVD or the like, various organic barrier layers, an antistatic layer, a release layer, an adhesive layer, etc.

<Fifth aspect of the invention>

The biaxially oriented polyester film according to the fifth aspect of the present invention is constituted by the above polyester; which biaxially oriented polyester film is provided on at least one surface thereof with a coating layer having a surface resistivity of not more than $1 \times 10^{13}$ Ω; and has a heat shrinkage percentage of not more than 5% as measured at 130°C in each of longitudinal and width directions thereof.

It is required that the biaxially oriented polyester film according to the fifth aspect of the present invention is provided on at least one surface thereof with a coating layer having a surface resistivity of not more than $1 \times 10^{13}$ Ω. When the surface resistivity of the coating layer is more than $1 \times 10^{13}$ Ω, the resultant film tends to be insufficient in antistatic effect, thereby failing to accomplish the aimed object of the fifth aspect of the present invention. The surface resistivity of the coating layer is preferably not more than $1 \times 10^{12}$ Ω, and the lower limit thereof is usually $1 \times 10^7$ Ω.

The coating layer may be formed on such a film obtained after completing a crystallization orientation thereof by thermally fixing the biaxially stretched film. However, the coating layer is preferably produced by a so-called in-line coating method of applying a coating solution using water as a main dispersing medium onto one or both surfaces of the polyester film before completion of crystallization orientation thereof during the polyester film-forming process, and then stretching the resultant film in at least one direction, followed by thermally fixing the stretched film. Such an in-line coating method is advantageous because the method provides an excellent productivity and can achieve a strong adhesion between the coating layer and the polyester film.

The above coating layer is required to contain the following antistatic agents in order to attain the above surface resistivity.

Examples of the anionic antistatic agents may include metal salts or quaternary amine salts of alkylsulfonic acids, metal salts or quaternary amine salts of alkylbenzenesulfonic acids, metal salts or quaternary amine salts of phosphoric esters, metal salts or quaternary amine salts of alkylphosphoric esters, metal salts or quaternary amine salts of polystyrenesulfonic acids, and metal salts or quaternary amine salts of copolymers or oligomers which are obtained by reacting styrenesulfonic acid with a monomer having a double bond capable of radical polymerization such as ethylene, styrene, acrylic acid, acrylic esters, methacrylic acid, methacrylic esters, vinyl chloride, vinyl acetate and vinyl ethers.

Examples of the cationic antistatic agents may include alkyl ammonium chlorides, alkylbenzene ammonium chlorides, and polymers containing either ionized nitrogen or pyrrolidium ring on a main chain thereof, etc.

Examples of the polymers containing an ionized nitrogen atom on a main chain thereof may include ionene polymers. Specific examples of such compounds may include those described in Japanese Patent Publication (KOKOKU) Nos. 53-23377(1978) and 54-10039(1979), Japanese Patent Application Laid-Open (KOKAI) Nos. 47-34581(1972), 56-76451(1981), 58-93710(1983), 61-18750(1986) and 63-68687(1988), etc.

Specific examples of the polymers containing a pyrrolidium ring on a main chain thereof may include such compounds as described in Japanese Patent Application Laid-Open (KOKAI) Nos. 1-146931(1989), 1-166326(1989), 1-171940(1989), 1-171985(1989), 1-174538(1989) and 1-174539(1989), etc.

In the fifth aspect of the present invention, as the antistatic agent, in particular, cationic polymer compounds may be suitably used in view of a good antistatic performance thereof.

Also, the above antistatic agents may be used in combination with alkyleneglycol polymers such as polyethyleneglycol and polytetramethyleneglycol which have a molecular weight of usually 100 to 2000, preferably 500 to 1000. These alkyleneglycol polymers may be added for the purpose of decreasing the surface resistivity or decreasing a humidity dependence of the antistatic performance.

The coating layer preferably contains, in addition to the above antistatic agent, an organic polymer binder. The addition of the organic polymer binder enables enhancement in durability of the coating layer as well as adhesion of the coating layer to various functional layers applied thereonto upon the post treatments, for example, a hard coat layer, a release layer, an adhesive layer, etc.

As the above organic polymer binder, in view of a good adhesion to various functional layers, there are preferably used polyurethane resins, polyester resins, polyacrylate resins, polyvinyl resins and modified products or mixtures of these resins. When the organic polymer binder is used in the in-line coating method in which the coating layer is produced during the film-forming process, in order to allow the binder to be dissolved or finely dispersed in water upon preparation of a coating solution using water as a main solvent, it is required that an anionic, cationic or amphoteric hydrophilic component is introduced into a molecule of the polymer by copolymerization, or a water dispersant is added thereto.

The weight ratio of the antistatic agent to the organic polymer binder contained in the coating layer is usually 1:9 to 8:2. When the content of the antistatic agent is less than 10% by weight, the resultant coating layer tends to be insufficient in antistatic property. On the other hand, when the content of the antistatic agent is more than 80% by weight, the resultant coating layer tends to be insufficient in durability, and further when forming the functional layers on the coating layer, an adhesion strength thereto tends to be insufficient.

Also, the coating layer may further contain a crosslinking agent. Specific examples of the crosslinking agent may include methylolated or alkylolated urea-based compounds, melamine-based compounds, guanamine-based compounds, acrylamide-based compounds, polyamide-based compounds, epoxy compounds, oxazoline-based compounds, carbodiimide compounds, aziridine compounds, blocked polyisocyanates, silane coupling agents, titanium coupling agents and zircoaluminate coupling agents. These crosslinking agents may be previously bonded to the polymer binder.

Further, the coating layer may also contain fine particles, for example, organic particles such as crosslinked polystyrene particles or inorganic particles such as silica particles, for the purpose of preventing anchoring thereof or improving a slip property thereof. The fine particles have an average particle diameter of usually 0.005 to 0.5 μm, preferably 0.01 to 0.1 μm. The content of the fine particles in the coating layer is usually 1 to 10% by weight.

The coating amount of the coating layer after drying is usually 0.01 to 0.5 g/m$^2$, preferably 0.02 to 0.2 g/m$^2$. When the coating amount of the coating layer is less than 0.01 g/m$^2$, the coating layer tends to suffer from problems such as non-uniform thickness, failure to exhibit an effective antistatic effect, and insufficient adhesion to various functional layers applied upon the post treatments. On the other hand, when the coating amount of the coating layer is more than 0.5 g/m$^2$, the films tend to suffer from mutual blocking, resulting in problems such as poor slip property.

The biaxially oriented polyester film according to the fifth aspect of the present invention is required to exhibit a heat shrinkage percentage of not more than 5% as measured at 130°C in each of longitudinal and width directions thereof. When the heat shrinkage percentage of the film is more than 5%, the film tends to suffer from severe shrinkage due to heat applied upon the post treatments such as had coat-forming treatment, resulting in disadvantages such as distortion or wrinkles of the obtained film. The heat shrinkage percentage of the film is preferably not more than 4%, more preferably not more than 3%.

The biaxially oriented polyester film according to the fifth aspect of the present invention which includes the coating layer formed on one or both surfaces thereof preferably exhibits a film haze of not more than 10%. In particular, in the optical applications requiring a good transparency, the film haze is usually not more than 5%, preferably not more than 3%, more preferably not more than 2% a.

The thickness of the biaxially oriented polyester film according to the fifth aspect of the present invention is not particularly limited, and is usually 15 to 300 μm.

The biaxially oriented polyester film according to the fifth aspect of the present invention may be provided on the surface of at least one coating layer thereof with a hard coat layer. The hard coat layer may be composed of a known material which contains a polyacrylic acid derivative or a polymethacrylic acid derivative and is curable upon a crosslinking reaction accelerated by heat treatment or treatment with activation rays such as ultraviolet ray and electron beam. The thickness and hardness of the hard coat layer are not particularly limited, and may be frequently controlled such that the coating amount of the hard coat layer is from 0.1 to 5 g/m$^2$ after drying and curing, and the hardness thereof is about HB to 5H calculated as a pencil hardness. Further, the hard coat layer may be subjected to anti-glare treatment
in which fine irregularities are formed on the surface thereof for allowing irregular reflection of light thereon.

The anti-glare treatment may be conducted by a method of directly forming irregularities on the surface of the hard coat layer, a method of dispersing fine particles in the hard coat layer, etc.

In addition, the biaxially oriented polyester film according to the fifth aspect of the present invention may also be provided on the surface of at least one coating layer thereof with a release layer containing a silicone resin. The silicone resin is preferably susceptible to a curing reaction. The silicone resin may be, for example, of an addition reaction type, a condensation reaction type, or an ultraviolet or electron beam-curable type. The thickness of the release layer is not particularly limited, and may be controlled such that the coating amount thereof is usually 0.05 to 1 g/m$^2$.

The coating layer formed on at least one surface of the biaxially oriented polyester film according to the fifth aspect of the present invention exhibits a good antistatic property against not only the above hard coat layer and release layer but also various functional layers used in extremely extensive applications. Specific examples of such functional layers may include an ink accepting layer for ink-jet printing, a printing ink layer, an UV ink layer and a vacuum deposition layer composed of inorganic substances or metal oxides, as well as various thin film layers obtained by electron beam vapor deposition, sputtering, ion-plating, plasma polymerization, CVD or the like, an anti-reflection layer produced by alternately laminating thin film layers having a high refractive index and those having a low refractive index, a coating-type anti-reflection layer, a near-infrared shielding layer, various organic barrier layers, an adhesive layer, etc.

The antistatic performance of the coating layer formed on the biaxially oriented polyester film according to the fifth aspect of the present invention is preferably also exerted on the surface of the above respective functional layers formed thereover. The reason therefor is explained below by exemplifying the hard coat layer or the release layer.

That is, in order to impart an antistatic performance to the above functional layers, there may be used the method of adding compounds having an antistatic performance to the respective functional layers. However, in general, when these compounds having an antistatic performance are added to the hard coat layer or the release layer, there tends to arises such a problem that the hardness and releasability inherently required for the hard coat layer and release layer, respectively, are deteriorated. To solve this problem, it is preferred that the antistatic property of the film is produced only by the coating layer (undercoat layer) formed on the base film, and the functional layers such as the hard coat layer and the release layer have respective compositions which are specialized to exhibit respective inherent properties thereof. In this case, the specific surface resistance of the respective functional layers is controlled to usually not more than 1 x 10$^{14}$ Q, preferably not more than 1 x 10$^{13}$ Ω.

<Sixth aspect of the invention>

The release film according to the sixth aspect of the present invention is constituted by the biaxially oriented polyester film comprising the above polyester, and a release layer laminated on at least one surface of the biaxially oriented polyester film, wherein the release film has an amount of change in haze of not more than 1% as measured after heating the film at 150°C for 1 hour.

In the sixth aspect of the present invention, the biaxially oriented polyester film may be in the form of a single layer film as a layer structure in the thickness direction thereof, or a co-extruded film obtained by laminating at least two layers, preferably three or more layers together upon melt extrusion. In particular, in the case of the biaxially oriented polyester film with a laminated structure having three or more layers, it is preferred that the fine particles are added to only opposite surface layers but not added to the intermediate layer, since the resultant film can be improved in slip property without deterioration of a transparency thereof. However, it is required that all of polyesters constituting the respective layers of the laminated film satisfy the melting point range as specified above.

The release film according to the sixth aspect of the present invention is required to have the release layer on at least one surface thereof. The release layer is further required to contain components having a releasability such as silicone resins, fluorine resins, various waxes and aliphatic polyolefins. Among them, in particular, the release layer containing the silicone resins is generally excellent in releasability and, therefore, suitably used. For example, when the release layer used in the sixth aspect of the present invention contains silicone resins, such a release layer may be produced, e.g., by applying a coating solution containing a curing silicone resin onto at least one surface of the biaxially oriented polyester film, and then drying and curing the resultant coating layer.

As the curing silicone resin, there may be used any reactive silicone resin selected from, for example, addition-reactive silicones, condensation-reactive silicones and ultraviolet- or electron beam-curable silicones.

Examples of the addition-reactive silicone resins may include those silicone resins capable of forming a three-dimensional crosslinked structure by reacting a vinyl-terminated polydimethylsiloxane with a (-H)-terminated hydrogen silane in the presence of a platinum catalyst.

Examples of the condensation-reactive silicone resins may include those silicone resins capable of forming a three-dimensional crosslinked structure by condensing (-OH)-terminated polydimethylsiloxanes with each other or condensing a (-OH)-terminated polydimethylsiloxane with a (-H)-terminated hydrogen silane in the presence of an organotin catalyst.

Examples of the ultraviolet- or electron beam-curable silicone resins may include silicone resins of a most basic type using the same radical reaction as crosslinking reaction of ordinary silicone rubbers, silicone resins into which unsaturated groups are introduced for photocuring, silicone resins which are crosslinked by decomposing an onium salt by irradiation of ultraviolet ray to generate a strong acid, and cleaving an epoxy group with the string acid, silicone resins which are crosslinked by addition reaction of thiol to vinyl siloxane, etc. Also, the ultraviolet ray may be replaced with electron beam. Since the electron beam has a stronger energy than the ultraviolet ray, the use of electron beam enables the crosslinking reaction by radicals to proceed without polymerization initiator, unlike the ultraviolet ray.

In the sixth aspect of the present invention, the release layer is preferably produced on at least one surface of the biaxially oriented polyester film by the method of applying a coating solution containing a resin component composed of addition-reactive, condensation-reactive or ultraviolet- or electron beam-curable silicone resins thereonto, and then curing the resultant coating layer by heat-drying, heat-hardening or irradiation of ultraviolet ray (or electron beam). As the coating method of the coating solution, there may be used optional known coating methods. Examples of the coating methods may include roll coating methods such as a gravure coating method and a reverse coating method, bar coating methods such as a Mayer bar coating method, a spray coating method, an air-knife coating method, etc.

The drying and curing of the coating solution may be simultaneously performed. As the drying and curing conditions, there are preferably used a drying temperature of not less than 100°C and a drying time of not less than 30 sec. When the drying temperature is less than 100°C and the drying time is less than 30 sec, the silicone resin tends to be incompletely cured, resulting in disadvantages such as heavy peeling (lack of peel force) and back transfer (set-off) of the silicone resin layer.

The thickness of the release layer is usually 0.01 to 5 g/m$^2$, preferably 0.05 to 1 g/m$^2$, calculated as a coating amount of the cured silicone resin layer after drying. When the coating amount of the cured silicone resin layer after drying is less than 0.01 g/m$^2$, the resultant release layer tends to be deteriorated in releasability. When the coating amount of the cured silicone resin layer after drying is more than 5 g/m$^2$, the resultant release layer itself tends to be deteriorated in adhesion to the film, curing property, etc.

In the sixth aspect of the present invention, a residual adhesion percentage of the release layer which indicates a cured degree thereof is usually not less than 90%, preferably not less than 95% in order to prevent migration and transfer of silicone to the surface of a counterpart to be adhered thereto and the surface of feed rolls used in the production process, etc.

The release film according to the sixth aspect of the present invention has an amount of change in film haze of not more than 1%, preferably not more than 0.5%, more preferably nor more than 0.2% as measured after heat-treating the film at 150°C for 1 hour. When the amount of change in film haze is more than 1%, a large amount of oligomers tend to bled out onto the surface of the release layer of the release film. As a result, for example, in the case where the release film is adhered to an adhesive layer of a polarizing plate or a phase difference plate, the oligomers bled-out tend to be migrated or transferred to the adhesive layer and further attached to the polarizing plate or phase difference plate, resulting in disadvantages such as deteriorated transparency of the adhesive layer and formation of white spots.

The haze value of the release film including the release layer according to the sixth aspect of the present invention is usually not more than 8%, preferably not more than 4%, more preferably not more than 2%. In this case, the lower limit of the haze value of the release film is usually 0.2%. Also, the total light transmittance of the release film according to the sixth aspect of the present invention is usually not less than 80%, preferably not less than 85%.

The release film according to the sixth aspect of the present invention exhibits a heat shrinkage percentage of usually not more than 5%, preferably not more than 4%, more preferably not more than 3% as measured at 130°C in each of longitudinal and width directions thereof. When the heat shrinkage percentage of the release film is more than 5%, the following problems tend to be caused. That is, in the case where a member such as a polarizing plate or a phase difference plate to which the release film is adhered through an adhesive layer is subjected, for example, to a hard coat-forming treatment, the release film tends to suffer from severe shrinkage due to heat applied upon the treatment, resulting in disadvantages such as curling, distortion or wrinkles of the release film as well as separation or peeling-off of the film from the adhesive layer.

Next, the processes for producing the polyester films according to the respective aspects of the present invention are specifically described.

First, the above raw aliphatic polyester is melt-extruded into a sheet shape from an extruder, and then cooled and solidified on a cooling roll to obtain an unstretched sheet. In this case, in order to improve a flatness or surface smoothness of the sheet, it is preferred to enhance a close contact between the sheet and the rotary cooling drum. For this purpose, there are preferably used an electrostatic adhesion method and/or a liquid-coating adhesion method. On a melt line of the extruder, a filter may be disposed in order to remove foreign substances or coarse agglomerated particles from the molten resin, and further a gear pump may be disposed in order to maintain an constant extrusion output. Upon the above melt extrusion, the raw polyester may be previously heated and crystallized to fully remove water therefrom and then charged into the extruder for the melt extrusion. Alternatively, the raw polyester in a non-dried state may be directly charged into a vented twin-screw extruder and then melt-extruded while removing water through vent ports. The resin temperature upon extrusion is preferably selected from such a temperature range of from a meting point (Tm) of the polyester used plus 15°C (Tm + 15°C) to (Tm + 50°C), i.e., [from (Tm + 15°C) to (Tm + 50°C)].

Upon the melt extrusion, a single extruder may be used to form a single layer sheet. Alternatively, a plurality of extruders may be used together with a multi-manifold die or feed block having a multi-layer structure such that the respective molten polyesters are merged and laminated therethrough and then extruded through a T-die into a multi-layered sheet, and further cooled and solidified on a cooling roll, thereby obtaining an unstretched sheet having a multi-layer structure.

Next, the thus obtained unstretched film is stretched in two axial directions to obtain a biaxially oriented film. For example, the longitudinal and lateral successive biaxial stretching process is performed as follows. First, the above unstretched film is stretched in a longitudinal direction using a roll stretching machine. The stretching temperature is usually from a glass transition temperature (Tg) of the raw polyester to (Tg + 30°C), i.e., [from (Tg) to (Tg + 30°C)], and the stretch ratio is usually 2.0 to 6.0 times, preferably 2.5 to 5.0 times. In the above in-line coating process, the obtained film is usually coated with the coating solution at this stage. In this case, the longitudinally stretched film may be previously subjected to corona discharge treatment before application of the coating solution. Next, the film was further stretched in a lateral direction. The stretching temperature and stretch ratio used upon the lateral stretching may be selected from the same ranges as used upon the longitudinal stretching. Successively, the obtained stretched film was heat-treated in a temperature range of from (Tm - 15°C) to (Tm - 60°C), either under tension or under relaxation within 30%, thereby obtaining the biaxailly oriented film.

Upon the above stretching process, there may be used a method in which the film is stretched up to a desired stretch ratio by one-stage stretching operation, or a method in which the film is stepwise stretched up to the desired stretch ratio by two or more-stage stretching operations. In any case, the stretching process is controlled such that the stretch ratios of the finally obtained film in the two axial directions lie within the above-specified ranges. Further, if required, before or after the heat treatment, the obtained biaxially oriented film may be stretched again in the longitudinal and/or lateral directions.

Also, the film may be simultaneously stretched in the longitudinal and lateral directions. The simultaneous stretching procedure is as follows. First, using a tenter-type simultaneous biaxial stretching machine, the above unstretched film is simultaneously stretched in the longitudinal and lateral directions such that the area ratio of the stretched film is usually 6 to 30 times that of the unstretched film. The simultaneous stretching temperature is from the glass transition temperature (Tg) of the raw polyester to (Tg + 40°C), i.e., [from (Tg) to (Tg + 40°C)], similarly to the successive biaxial stretching process mentioned above. In particular, as the simultaneous biaxial stretching machine, there is preferably used such a stretching machine whose clip is actuated by a linear motor because the stretch ratio as well as the relaxation percentage upon heat-setting can be controlled with a high freedom. The film produced by the simultaneous biaxial stretching process may be heat-treated by the same method as used in the successive biaxial stretching process, and further may be subjected to relaxation treatment in the longitudinal and lateral directions, if required.

Meanwhile, the coating layer used in the present invention may be produced not by the in-line coating method, but by the method of applying the coating solution onto the biaxially oriented film which is already orientation-crystallized, and then drying and solidifying the resultant coating layer.

The present invention is described in more detail by the following examples. However, these examples are only illustrative and not intended to limit the scope of the present invention. Meanwhile, the term "part(s)" used in Examples and Comparative Examples represents "part(s) by weight". Further, various properties described in Examples and Comparative Examples were measured by the following methods.

1. Melting point (Tm) of polyester:

Using a differential thermal analyzer "DSC-2920" manufactured by TA Instruments Inc., an endotherm peak temperature of the polyester due to melting of crystals thereof was measured at a temperature rise rate of 20°C/min, and the measured temperature was regarded as a melting point of the polyester.

2. Heat shrinkage percentage at 130°C of film:

A distance (L1) of about 50 mm between gauge marks on the film was accurately measured in each of longitudinal (MD) and width (TD) directions thereof, and then the film was heat-treated in an oven under tension-free condition at 130°C for 10 min. Thereafter, the film was cooled, and the distance between the gauge marks (L2) was measured accurately again to calculate an amount of change in distance between the gauge marks between before and after the heat treatment according to the following formula, and the calculated value was regarded as a heat shrinkage percentage at 130°C of the film:

$$\text{Heat shrinkage percentage} = \{(L1 - L2)/L1\} \times 100 \ (\%)$$

3. Total light transmittance:

Using an integrating sphere-type turbidimeter "NDH2000" manufactured by Nippon Denshoku Co., Ltd., according to JIS K 7136(2000) (corresponding to ISO 14782-1999), the total light transmittance (%) of the film was measured.

4. Wetting index:

The wetting index of the surface of the film was measured according to JIS K 6768(1995) (corresponding to ISO 8296-1987). In the measurement, a solution produced by Nakaraitesk Co., Ltd., was used as a standard solution for wetting index.

5. Average particle diameter of particles:

An equivalent spherical diameter of the particle which was present at the point of 50 wt% of whole particles as measured by light scattering method was regarded as an average particle diameter of the particles.

6. Adhesion strength to hard coat:

First, "KAYANOVA FOP-1700" produced by Nippon Kayaku Co., Ltd., was diluted with a mixed solvent containing toluene and methyl ethyl ketone (2-butanone) at a weight ratio of 1:1. The resultant coating solution was applied onto the surface of a polyester film (or the surface of a coating layer in the case where the coating layer was formed on the polyester film) by bar coating method. Next, the resultant coating layer was dried at 110°C for 1 min to remove the solvent therefrom, and then cured by irradiation of ultraviolet ray using a high-pressure mercury lamp at an output power of 120 W/cm, an irradiation distance of 15 cm and a moving rate of 10 m/min, thereby forming a hard coat layer thereon. The thus formed hard coat layer was cross-cut at intervals of 1 inch in width to form 100 squares thereon. Onto the thus cross-cut hard coat layer was attached Cellotape (tradename) produced by Nichiban Co., Ltd., and the resultant film was subjected to a peel test by 90° peel-off method (pulling speed: 2 in/min). The adhesion strength to the hard coat layer was evaluated on the basis of the following ratings:

⊚ : Number of cross-cut squares peeled ≤ 5

○: 5 < Number of cross-cut squares peeled ≤ 10
 (Ranks A and B were acceptable.)

∆: 10 < Number of cross-cut squares peeled ≤ 50

×: 50 < Number of cross-cut squares peeled

### 7. Center line average roughness (Ra):

The center line average roughness (Ra) was measured using a surface roughness tester "SE-3F" manufactured by Kosaka Kenkyusha Co., Ltd. More specifically, on the basis of a profile curve of the film, a film portion with a standard length L (2.5 cm) as measured in the direction of a center line thereof was cut out. Assuming that the center line of the cut-out film portion was an X axis; the longitudinal magnification direction was an Y axis; and a roughness curve was expressed by the formula: Y = f(X), the center line average roughness (unit: μm) was calculated according to the following formula:

$$Ra = (1/L) \int_0^L |f(X)|\, dX$$

The center line average roughness was expressed by an average of center line roughness values of the cut-out film portion which were respectively obtained from 10 profile curves prepared on the surface of the sample film. Meanwhile, the above measurement was conducted under such a condition that a tip radius of a probe was 2 μm, a load applied thereto was 30 mg, and a cut-off value was 0.08 mm.

### 8. Film haze:

Using an integrating sphere-type turbidimeter "NDH 2000" manufactured by Nippon Denshoku Co., Ltd., according to JIS K 7136(2000) (corresponding to ISO 14782-1999), the haze (%) of the film was measured.

### 9. Winding property of film:

The film was wound up into a roll while subjecting one surface thereof to corona discharge treatment at a velocity of 100 m/sec to examine an appearance of the surface of the rolled film. Ranks A and B were acceptable levels in which the film was practically usable without problems.
Rank A: Surface of the roll was free from any defects such as wrinkles or pimple
Rank B: Surface of the roll was free from wrinkles, but suffered from extremely slight pimple
Rank C: Surface of the roll suffered from some wrinkles and some pimple
Rank D: Surface of the roll suffered from a large number of wrinkles

### 10. Amount of change in film haze:

The film fixed at four sides thereof were heat-treated in a forced circulation-type oven in a nitrogen atmosphere at 150°C for 1 hour and 4 hours, and then taken out of the oven and cooled to measure a haze value thereof. The thus measured haze value was compared with that before the heat treatment to obtain a difference in haze therebetween. An absolute value of the thus obtained difference was regarded as the amount of change in haze of the film (%).

### 11. Surface resistivity:

The surface resistivity (Ω/□) of the film was measured by a four-probe method according to JIS K 7194. As the measuring apparatus, there was used "Lotest AMCP-T400" manufactured by Mitsubishi Kagaku Co., Ltd.

12. Change of transparent conductive laminate after heating:

The transparent conductive film fixed at four sides thereof were heat-treated in a forced circulation-type oven in a nitrogen atmosphere at 150°C for 1 hour, and then taken out of the oven and cooled to observe a change in appearance thereof. An absolute value of difference in haze value of the film between before and after the heat treatment was regarded as the amount of change in haze of the film (%). Further, assuming that the surface resistivity ($\Omega/\square$) of the film before the heat treatment was 1, the change in surface resistivity ($\Omega/\square$) after the heat treatment was calculated.

13. Specific surface resistance value:

The specific surface resistance value of the film was measured using a concentric electrode "16008A" (tradename) manufactured by Japan Hewlett Packard Co., Ltd., which had an inside electrode diameter of 50 mm and an outside electrode diameter of 70 mm. The test specimen was fitted to the concentric electrode in an atmosphere of 23°C and 50% RH, and a voltage of 100 V was applied thereto to measure a specific surface resistance of the test specimen using a high-resistance voltmeter "4329A" (tradename) manufactured by Japan Hewlett Packard Co., Ltd.

14. Easiness of contamination of surface of film (surface of coating layer or non-coated surface)

The surface of the film was rubbed with a dried fabric lens cleaner by 10 strokes at a constant speed while applying substantially no force thereto. Then, crushed ashes of cigarette were approached to the surface of the film to examine whether the ashes were attracted thereonto or not. The results were evaluated according to the following ratings.

○: No ashes were attracted

Δ: Small amount of ashes were attracted

✕: Large amount of ashes were attracted

15. Residual adhesion percentage of release film

The residual adhesion strength and basic adhesion strength prescribed below were measured, and the residual adhesion percentage (%) was calculated from the measured values according to the following formula. Meanwhile, the measurement of the respective adhesion strengths was conducted at 23±2°C and 50±5% RH.

Residual adhesion percentage (%) =

(residual adhesion strength/basic adhesion

strength) x 100

Residual adhesion strength:

An adhesive tape "No. 31B" produced by Nitto Denko Co., Ltd., was press-attached onto the surface of a release layer of a sample film by rolling a 2 kg rubber roller thereover by one stroke, and the resultant laminate was heat-treated at 100°C for 1 hour. Thereafter, the press-attached adhesive tape was peeled off from the sample film, and further press-attached onto a stainless steel plate according to JIS C 2107 (adhesion strength to stainless steel plate; 180° peel method) to measure an adhesion strength therebetween. The thus measured adhesion strength was regarded as a residual adhesion strength.

Basic adhesion strength:

The same adhesive tape "No. 31B" as used for measurement of the above residual adhesion strength was press-attached onto a stainless steel plate according to JIS C 2107 to measure an adhesion strength therebetween by the same method. The thus measured adhesion strength was regarded as a basic adhesion strength.

16. Degree of contamination of adhesive layer:

The release film fixed at four sides thereof were heat-treated in a forced circulation-type oven in a nitrogen atmosphere at 150°C for 1 hour, and then taken out of the oven and cooled. A black polyvinyl chloride tape "ESLON TAPE No. 360" produced by Sekisui Kagaku Co., Ltd., was attached onto the surface of a release layer of the above release film, and then peeled off therefrom to visually observe its adhesive layer and record the change in condition thereof.

The processes for producing the respective raw polyesters used in the following Examples and Comparative Examples were as follows.

<Polyester A1>

A reactor equipped with a stirrer, a distillate discharge tube and a pressure-decreasing device was charged with 184 parts of 1,4-cyclohexanedicarboxylic acid (trans isomer content: 98%), 158 parts of 1,4-cyclohexane dimethanol (trans isomer content: 67%) and 0.9 part of a 6 wt% butanol solution of $Ti(OC_4H_9)_4$, and the contents of the reactor were heated to 150°C under a nitrogen flow and then heated to 200°C for 1 hour. Thereafter, the resultant reaction solution was held at 200°C for 1 hour to conduct the esterification reaction thereof, and then heated from 200°C to 250°C for 45 min while gradually decreasing an inside pressure of the reactor to conduct a polycondensation reaction thereof. After conducting the polymerization reaction under a reactor inside pressure of 0.1 kPa at a reaction temperature of 250°C for two hours and 15 minutes, the obtained polymer was extruded into water to form strands, and then pelletized. As a result, it was confirmed that the obtained pellets exhibited an intrinsic viscosity (IV) of 0.97 dl/g, and the polyester had a melting point of 220°C.

<Polyester B1>

The polyester A1 was blended with amorphous silica having an average particle diameter of 2.4 µm such that the silica content in the resultant mixture was 0.1% by weight. The obtained mixture was charged into a vented twin-screw extruder, melt-kneaded therein under a vacuum of 1 kPa while removing water therefrom, extruded into strands, and then cooled in water to prepare a master batch of the particles. As a result, it was confirmed that the obtained polymer exhibited an intrinsic viscosity (IV) of 0.85 dl/g and a melting point of 220°C.

<Polyester C1>

The same reactor as used for production of the polyester A1 was charged with 160 parts of 1,4-cyclohexanedicarboxylic acid (trans isomer content: 98%), 118 parts of 1,4-cyclohexanedimethanol (trans isomer content: 100%) and 1.8 parts of a 14 wt% butanol solution of $NaHTi(OC_4H_9)_6$, and the contents of the reactor were heated to 150°C under a nitrogen flow and then heated to 210°C for 1 hour. Thereafter, the resultant reaction solution was held at 210°C for 1 hour to conduct an esterification reaction thereof, and then heated from 210°C to 270°C for 45 min while gradually decreasing an inside pressure of the reactor to conduct a polycondensation reaction thereof. After conducting the polymerization reaction under a reactor inside pressure of 0.1 kPa at a reaction temperature of 270°C for 1 hour, the obtained polymer was extruded into water to form strands, and then pelletized. As a result, it was confirmed that the obtained pellets exhibited an intrinsic viscosity (IV) of 0.55 dl/g. Further, the obtained polymer was subjected to solid-state polymerization at 220°C for 3 hours under a nitrogen flow. As a result, it was confirmed that the obtained polyester exhibited an intrinsic viscosity (IV) of 0.95 dl/g. In addition, a sample prepared by once melting the polymer and then rapidly cooling the molten polymer was subjected to measurement of a melting point thereof. As a result, it was confirmed that the polyester had a melting point of 242°C.

<Polyester D1>

The polyester C1 was blended with amorphous silica having an average particle diameter of 2.4 µm such that the silica content in the resultant mixture was 0.1% by weight. The obtained mixture was charged into a vented twin-screw extruder, melt-kneaded therein under a vacuum of 1 kPa while removing water therefrom, extruded into strands, and then cooled in water to prepare a master batch of the particles. As a result, it was confirmed that the obtained polymer exhibited an intrinsic viscosity (IV) of 0.84 dl/g and a melting point of 242°C.

<Polyester E1>

The same procedure as defined in production of the polyester A1 was conducted except that 1,4-cyclohexanedicarboxylic acid (trans isomer content: 77%) was used instead of 1,4-cyclohexanedicarboxylic acid (trans isomer content: 98%), thereby obtaining polyester pellets. As a result, it was confirmed that the obtained pellets exhibited an intrinsic viscosity (IV) of 0.97 dl/g, and the polyester had a melting point of 192°C.

<Polyester F1>

The polyester E1 was blended with amorphous silica having an average particle diameter of 2.4 µm such that the silica content in the resultant mixture was 0.1% by weight. The obtained mixture was charged into a vented twin-screw extruder, melt-kneaded therein under a vacuum of 1 kPa while removing water therefrom, extruded into strands, and then cooled in water to prepare a master batch of the particles. As a result, it was confirmed that the obtained polymer exhibited an intrinsic viscosity (IV) of 0.85 dl/g and a melting point of 192°C.

<Polyester A2>

Pellets of polyester A2 having an intrinsic viscosity (IV) of 0.92 dl/g and a melting point of 220°C were produced under the same conditions as defined in production of the polyester A1.

<Polyester B2>

The polyester A2 was dry-blended with divinyl benzene-crosslinked polystyrene particles having an average particle diameter of 1.1 µm such that the content of the polystyrene particles in the resultant mixture was 0.1% by weight. The obtained mixture was charged into a vented twin-screw extruder, melt-kneaded therein under a vacuum of 1 kPa while removing water therefrom, extruded into strands, and then cooled in water to prepare a master batch of the particles. As a result, it was confirmed that the obtained polymer exhibited an intrinsic viscosity (IV) of 0.82 dl/g and a melting point of 220°C.

<Polyester C2>

The polyester A2 was dry-blended with amorphous silica having an average particle diameter of 2.3 µm such that the silica content in the resultant mixture was 0.1% by weight. The obtained mixture was charged into a vented twin-screw extruder, melt-kneaded therein under a vacuum of 1 kPa while removing water therefrom, extruded into strands, and then cooled in water to prepare a master batch of the particles. As a result, it was confirmed that the obtained polymer exhibited an intrinsic viscosity (IV) of 0.82 dl/g and a melting point of 220°C.

<Polyester D2>

The same procedure as defined in production of the polyester A2 was conducted except that 1,4-cyclohexanedicarboxylic acid (trans isomer content: 77%) was used instead of 1,4-cyclohexanedicarboxylic acid (trans isomer content: 98%), thereby obtaining polyester pellets. As a result, it was confirmed that the obtained pellets exhibited an intrinsic viscosity (IV) of 0.90 dl/g, and the polyester had a melting point of 192°C.

<Polyester E2>

The polyester D2 was dry-blended with divinyl benzene-crosslinked polystyrene particles having an average particle diameter of 1.1 µm such that the content of the polystyrene particles in the resultant mixture was 0.1% by weight. The obtained mixture was charged into a vented twin-screw extruder, melt-kneaded therein under a vacuum of 1 kPa while removing water therefrom, extruded into strands, and then cooled in water to prepare a master batch of the particles. As a result, it was confirmed that the obtained polymer exhibited an intrinsic viscosity (IV) of 0.78 dl/g and a melting point of 192°C.

<Polyester F2>

The polyester A2 was dry-blended with calcium carbonate particles having an average particle diameter of 1.2 µm such that the content of the calcium carbonate particles in the resultant mixture was 0.25% by weight. The obtained mixture was charged into a vented twin-screw extruder, melt-kneaded therein under a vacuum of 1 kPa while removing water therefrom, extruded into strands, and then cooled in water to prepare a master batch of the particles. As a result, it was confirmed that the obtained polymer exhibited an intrinsic viscosity (IV) of 0.79 dl/g and a melting point of 220°C.

<Polyester A3>

The same procedure as defined in production of the polyester A1 was conducted except that the polycondensation reaction time was changed to 2 hours, thereby obtaining polyester pellets. As a result, it was confirmed that the obtained polyester pellets exhibited an intrinsic viscosity (IV) of 0.85 dl/g and a melting point of 220°C.

<Polyester B3>

The polyester A3 was dry-blended with amorphous silica having an average particle diameter of 2.4 μm such that the silica content in the resultant mixture was 0.1% by weight. The obtained mixture was charged into a vented twin-screw extruder, melt-kneaded therein under a vacuum of 1 kPa while removing water therefrom, extruded into strands, and then cooled in water to prepare a master batch of the particles. As a result, it was confirmed that the obtained polymer exhibited an intrinsic viscosity (IV) of 0.76 dl/g and a melting point of 220°C.

<Polyester C3>

The same procedure as defined in production of the polyester A3 was conducted except that 1,4-cyclohexanedicarboxylic acid (trans isomer content: 77%) was used instead of 1,4-cyclohexanedicarboxylic acid (trans isomer content: 98%), thereby obtaining polyester pellets. As a result, it was confirmed that the obtained pellets exhibited an intrinsic viscosity (IV) of 0.84 dl/g, and the polyester had a melting point of 192°C.

<Polyester A4>

There was used a polyester having the same properties as those of the polyester A1 which was produced by the same method as used for production of the polyester A1.

<Polyester B4>

There was used a polyester having the same properties as those of the polyester B1 which was produced by the same method as used for production of the polyester B1.

<Polyester C4>

There was used a polyester having the same properties as those of the polyester C1 which was produced by the same method as used for production of the polyester C1.

<Polyester D4>

There was used a polyester having the same properties as those of the polyester D1 which was produced by the same method as used for production of the polyester D1.

<Polyester E4>

There was used a polyester having the same properties as those of the polyester E1 which was produced by the same method as used for production of the polyester E1.

<Polyester F4>

There was used a polyester having the same properties as those of the polyester F1 which was produced by the same method as used for production of the polyester F1.

<Polyester A5>

There was used a polyester having the same properties as those of the polyester A3 which was produced by the same method as used for production of the polyester A3.

<Polyester B5>

There was used a polyester having the same properties as those of the polyester B3 which was produced by the same method as used for production of the polyester B3.

<Polyester C5>

The polyester A5 was dry-blended with divinyl benzene-crosslinked polystyrene particles having an average particle diameter of 1.1 μm such that the content of the polystyrene particles in the resultant mixture was 0.1% by weight. The obtained mixture was charged into a vented twin-screw extruder, melt-kneaded therein under a vacuum of 1 kPa while removing water therefrom, extruded into strands, and then cooled in water to prepare a master batch of the particles. As a result, it was confirmed that the obtained polymer exhibited an intrinsic viscosity (IV) of 0.82 dl/g and a melting point of 220°C.

<Polyester D5>

The same procedure as defined in production of the polyester A5 was conducted except that 1,4-cyclohexanedicarboxylic acid (trans isomer content: 77%) was used instead of 1,4-cyclohexanedicarboxylic acid (trans isomer content: 98%), thereby obtaining polyester pellets. As a result, it was confirmed that the obtained pellets exhibited an intrinsic viscosity (IV) of 0.84 dl/g, and the polyester had a melting point of 192°C.

<Polyester E5>

The polyester D5 was dry-blended with amorphous silica having an average particle diameter of 2.4 μm such that the silica content in the resultant mixture was 0.1% by weight. The obtained mixture was charged into a vented twin-screw extruder, melt-kneaded therein under a vacuum of 1 kPa while removing water therefrom, extruded into strands, and then cooled in water to prepare a master batch of the particles. As a result, it was confirmed that the obtained polymer exhibited an intrinsic viscosity (IV) of 0.76 dl/g and a melting point of 192°C.

<Polyester A6>

There was used a polyester having the same properties as those of the polyester A3 which was produced by the same method as used for production of the polyester A3.

<Polyester B6>

There was used a polyester having the same properties as those of the polyester B3 which was produced by the same method as used for production of the polyester B3.

<Polyester C6>

There was used a polyester having the same properties as those of the polyester C5 which was produced by the same method as used for production of the polyester C5.

<Polyester D6>

There was used a polyester having the same properties as those of the polyester D5 which was produced by the same method as used for production of the polyester D5.

<Polyester E6>

There was used a polyester having the same properties as those of the polyester E5 which was produced by the same method as used for production of the polyester E5.

Examples 1-1 to 1-3 and Comparative Examples 1-1 to 1-3:

These Examples and Comparative Examples were conducted for explaining the first aspect of the present invention.

Example 1-1:

The polyester A1 and the polyester B1 were mixed with each other at a weight ratio of 4:1. The resultant mixture was charged into a unidirectional rotation-type twin-screw extruder whose melt line temperature was set to 250°C and whose vent port was connected to a vacuum line, melt-extruded into a sheet shape through a T-die under a vacuum of 1 kPa while removing water therefrom. The thus extruded molten resin was cast over a cooling drum maintained at 20°C. In this case, the molten resin was adhered onto the surface of the cooling drum by using an electrostatic adhesion method. The thus produced unstretched sheet was subjected to a longitudinal stretching process using a roll stretching method. Specifically, the unstretched sheet was preheated to 70°C by a plurality of ceramic heating rolls, and stretched at a stretch ratio of 3.0 times in the longitudinal direction using the heating rolls in combination with an IR heater. Next, the thus obtained monoaxially stretched film was introduced into a tenter, preheated at 90°C, and then stretched at a stretch ratio of 4.0 times in the width direction. Thereafter, in the same tenter, the thus stretched film was heat-set at 180°C under tension and then relaxed by 3% in the width direction at 150°C, thereby obtaining a 50 μm-thick biaxially oriented polyester film. The properties of the thus obtained film are shown in Table 1-1.

In Table 1-1, "1,4-CHDA" represents 1,4-cyclohexanedicarboxylic acid; "1,4-CHDM" represents 1,4-cyclohexanedimethanol; "TPA" represents terephthalic acid; and "EG" represents ethyleneglycol (these definitions are also similarly applied to subsequent descriptions).

Example 1-2:

The same procedure for melt extrusion as defined in Example 1-1 was conducted except that the polyester C1 and the polyester D1 were mixed with each other at a weight ratio of 4:1, the resultant mixture was charged into the same extruder as used in Example 1-1, and the melt line temperature was set to 270°C, thereby obtaining an unstretched sheet. The thus produced unstretched sheet was subjected to a longitudinal stretching process using a roll stretching method. Specifically, the unstretched sheet was preheated to 75°C by a plurality of ceramic heating rolls, and stretched at a stretch ratio of 3.0 times in the longitudinal direction using the heating rolls in combination with an IR heater. Next, the thus obtained monoaxially stretched film was introduced into a tenter, preheated at 95°C, and then stretched at a stretch ratio of 4.0 times in the width direction. Thereafter, in the same tenter, the thus stretched film was heat-set at 210°C under tension and then relaxed by 3% in the width direction at 150°C, thereby obtaining a 50 μm-thick biaxially oriented polyester film. The properties of the thus obtained film are shown in Table 1-1.

Example 1-3:

After one surface of the film obtained in Example 1-1 was subjected to corona treatment, hard coat layers were formed on both surfaces of the film. As a result, it was confirmed that the corona-untreated surface of the film exhibited a wetting index of 39 mN/m, whereas the corona-treated surface thereof exhibited a wetting index as high as 52 mN/m. The adhesion strength of the hard coat layers formed on both surfaces of the film were evaluated. As a result, it was confirmed that the hard coat layer formed on the corona-treated surface of the film underwent peeling-off of only several cross-cut squares and, therefore, exhibited an adhesion strength of Rank ○, whereas the hard coat layer formed on the corona-untreated surface of the film suffered from peeling-off of such a large number of cross-cut squares as reaching a half or more of the whole number of cross-cut squares and, therefore, exhibited a poor adhesion strength given by Rank × .

Comparative Example 1-1:

The same procedure as defined in Example 1-2 including melt extrusion, formation of unstretched sheet, longitudinal stretching, lateral stretching and heat-setting was conducted except that a polyethylene terephthalate resin containing 0.02% by weight of amorphous silica having an average particle diameter of 2.4 μm was used, the melt line temperature upon the melt extrusion was set to 280°C, and the longitudinal stretching temperature was changed to 83°C, thereby obtaining a 50 μm-thick biaxially oriented polyester film. The properties of the obtained film are shown in Table 1-1.

Comparative Example 1-2:

The same procedures as defined in Example 1-1 was conducted except that the heat-setting temperature was changed to 150°C, and then the film was relaxed by 3% in the width direction at 130°C, thereby obtaining a 50 μm-thick biaxially oriented polyester film. The properties of the thus obtained film are shown in Table 1-1.

Comparative Example 1-3:

The polyester E1 and the polyester F1 were mixed with each other at a weight ratio of 4:1, and then the melt extrusion of the resultant mixture was conducted by the same method as defined in Example 1-1, thereby obtaining an unstretched sheet. The thus produced unstretched sheet was subjected to a longitudinal stretching process using a roll stretching method. Specifically, the unstretched sheet was preheated to 55°C by a plurality of ceramic rolls, and stretched at a stretch ratio of 3.0 times in the longitudinal direction using the heating rolls in combination with an IR heater. Next, the thus obtained monoaxially stretched film was introduced into a tenter, preheated at 70°C, and then stretched at a stretch ratio of 4.0 times in the width direction. Thereafter, in the same tenter, the thus stretched film was heat-set at 150°C under tension and then relaxed by 3% in the width direction at 130°C, thereby obtaining a 50 μm-thick biaxially oriented polyester film. The properties of the thus obtained film are shown in Table 1-1.

Table 1-1

|  | Examples | | Comparative Examples | | |
|---|---|---|---|---|---|
|  | 1-1 | 1-2 | 1-1 | 1-2 | 1-3 |
| Composition of polyester (%) |  |  |  |  |  |
| Dicarboxylic acid component (trans isomer fraction) | 1,4-CHDA: 100% (98%) | 1,4-CHDA: 100% (98%) | TPA: 100% (-) | 1,4-CHDA: 100% (98%) | 1,4-CHDA: 100% (77%) |
| Diol component (trans isomer fraction) | 1,4-CHDM: 100% (67%) | 1,4-CHDM: 100% (100%) | EG: 100% (-) | 1,4-CHDM: 100% (67%) | 1,4-CHDM: 100% (67%) |
| Melting point of film (°C) | 220 | 242 | 259 | 220 | 192 |
| Heat shrinkage percentage at 130°C (%) |  |  |  |  |  |
| MD | 3.3 | 3.1 | 2.9 | 6.7 | 10.5 |
| TD | 0.4 | 0.3 | 0.3 | 4.1 | 6.9 |
| Total light transmittance (%) | 91.5 | 91.5 | 88.0 | 91.5 | 91.5 |

Examples 2-1 to 2-3 and Comparative Examples 2-1 to 2-3:

These Examples and Comparative Examples were conducted for explaining the second aspect of the present invention.

Example 2-1:

The polyester A2 and the polyester B2 were mixed with each other at a weight ratio of 1:1. The resultant mixture was charged into a vented twin-screw extruder whose melt line temperature was set to 250°C, and then melt-extruded therefrom. Specifically, in this case, the molten resin was extruded into a sheet shape from a T-die of the extruder whose vent port was connected to a vacuum line, under a vacuum of 1 kPa through a gear pump and a filter while removing water therefrom. The thus extruded molten resin (single layer) was cast over a cooling drum maintained at 20°C by using an electrostatic adhesion method. The thus produced unstretched sheet was subjected to a longitudinal stretching process using a roll stretching method. Specifically, the unstretched sheet was preheated to 70°C by a plurality of ceramic heating rolls, and then stretched at a stretch ratio of 3.0 times in the longitudinal direction using the heating rolls in combination with an IR heater. Next, the thus obtained monoaxially stretched film was introduced into a tenter, preheated at 90°C, and then stretched at a stretch ratio of 3.7 times in the width direction. Thereafter, in the same tenter, the thus stretched film was heat-set at 180°C under tension, relaxed by 3% in the width direction at 150°C and then taken up into a roll, thereby obtaining a biaxially oriented polyester film having a total thickness of 50 μm. The properties of the thus obtained film are shown in Table 2-1.

Example 2-2:

A resin composed of 100% of the polyester B2 was charged into an extruder for a surface layer. Separately, a mixture containing the polyester A2 and recycled flakes obtained from the film-forming process at a weight ratio of 9:1 was charged into an extruder for an intermediate layer. Both of the extruders were vented twin-screw extruders, and the resins and flakes were used without being dried. The resins were melt-extruded from the respective extruders at 250°C while removing water through a vent port thereof under a vacuum of 1 kPa. Specifically, the molten polymers were passed through a gear pump and a filter disposed in the respective extruders, merged and laminated within a feed block, and then melt-extruded from a T-die, thereby obtaining an unstretched sheet having a three layer structure in which opposite surface layers were composed of the same raw material. In this case, the unstretched sheet was formed such that the thicknesses of the opposite surface layers were identical to each other, and a sum of the thicknesses of the opposite surface layers was 40% of a total thickness of the unstretched sheet. In addition, the unstretched sheet was cast over a cooling drum maintained at 20°C by an electrostatic adhesion method similarly to Example 1. Thereafter, the unstretched sheet was subjected to longitudinal stretching, lateral stretching and heat-setting similarly to Example 2-1 and then taken up into a roll, thereby obtaining a biaxially oriented polyester film having a total thickness of 50 μm. The properties of the thus obtained film are shown in Table 2-1.

Example 2-3:

The same procedure as defined in Example 2-2 was conducted except that a resin composed of 100% of the polyester C2 was charged into an extruder for a surface layer, and separately, a resin composed of 100% of the polyester A2 was charged into an extruder for an intermediate layer, thereby obtaining a biaxially oriented polyester film. The film was formed such that a sum of thicknesses of opposite surface layers was 8% of a total thickness of the film. The properties of the thus obtained film are shown in Table 2-1.

Comparative Example 2-1:

The same procedure for melt extrusion as defined in Example 2-1 was conducted except that a raw resin prepared by mixing the polyester D2 and the polyester E2 at a weight ratio of 1:1 was used, thereby obtaining a single layer unstretched sheet. The thus produced unstretched sheet was subjected to a longitudinal stretching process using a roll stretching method. Specifically, the unstretched sheet was preheated to 70°C by a plurality of ceramic heating rolls, and then stretched at a stretch ratio of 3.0 times in the longitudinal direction using the heating rolls in combination with an IR heater. Next, the thus obtained monoaxially stretched film was introduced into a tenter, preheated at 90°C, and then stretched at a stretch ratio of 3.7 times in the width direction. Thereafter, in the same tenter, the thus stretched film was heat-set at 150°C under tension, relaxed by 3% in the width direction at 130°C and then taken up into a roll, thereby obtaining a biaxially oriented polyester film having a total thickness of 50 μm. The properties of the thus obtained film are shown in Table 2-2.

Comparative Example 2-2:

The same procedure for melt extrusion as defined in Example 2-1 was conducted except that a raw resin prepared by mixing the polyester A2 and the polyester C2 at a weight ratio of 9:1 was used, thereby obtaining a single layer unstretched sheet. The thus produced unstretched sheet was subjected to longitudinal stretching, lateral stretching and heat-setting by the same method as defined in Example 2-1, thereby obtaining a biaxially oriented polyester film having a total thickness of 50 μm. The properties of the thus obtained film are shown in Table 2-2.

Comparative Example 2-3:

The same procedure for melt extrusion as defined in Example 2-1 was conducted except that a raw resin composed of 100% of the polyester F2 was used, thereby obtaining a single layer unstretched sheet. The thus produced unstretched sheet was subjected to longitudinal stretching, lateral stretching and heat-setting by the same method as defined in Example 1, thereby obtaining a biaxially oriented polyester film having a total thickness of 50 μm. The properties of the thus obtained film are shown in Table 2-2.

Table 2-1

| | Examples | | |
|---|---|---|---|
| | 2-1 | 2-2 | 2-3 |
| Composition of polyester (%) | | | |
| Dicarboxylic acid component (trans isomer fraction) | 1,4-CHDA : 100% (98%) | 1,4-CHDA : 100% (98%) | 1,4-CHDA : 100% (98%) |
| Diol component (trans isomer fraction) | 1,4-CHDM : 100% (67%) | 1,4-CHDM : 100% (67%) | 1,4-CHDM : 100% (67%) |
| Melting point of film (°C) | 220 | 220 | 220 |
| Layer structure of film | Single | Laminate (3-layered) | Laminate (3-layered) |
| Tickness ratio between laminated layers (A/B/A') (%) | - | 20/60/20 | 4/92/4 |
| Surface layer (A, A') | | | |
| Kind of particles | Crosslinked polystyrene | Crosslinked polystyrene | Amorphous silica |
| Average particle diameter (μm) | 1.1 | 1.1 | 2.4 |
| Content of particles (ppm) | 500 | 1000 | 1000 |
| Intermediate layer (B) | | | |
| Kind of particles | No particles | Croddlinked polystyrene | No particles |
| Average particle diameter (μm) | | 1.1 | |
| Content of particles (ppm) | | 63 | |
| Film haze (%) | 3.3 | 1.9 | 1.8 |
| Center line average roughness (Ra: nm) | 17 | 22 | 19 |
| Film winding property (Rank) | B | A | A |
| Heat shrinkage percentage at 130 °C (%) | | | |
| MD | 3.0 | 3.0 | 3.0 |
| TD | 0.3 | 0.3 | 0.3 |

Table 2-2

| | Comparative Examples | | |
|---|---|---|---|
| | 2-1 | 2-2 | 2-3 |
| Composition of polyester (%) | | | |
| Dicarboxylic acid component (trans isomer fraction) | 1,4-CHDA : 100% (77%) | 1,4-CHDA : 100% (98%) | 1,4-CHDA : 100% (98%) |
| Diol component (trans isomer fraction) | 1,4-CHDM : 100% (67%) | 1,4-CHDM : 100% (67%) | 1,4-CHDM : 100% (67%) |
| Melting point of film (°C) | 192 | 220 | 220 |
| Single layer | | | |
| Kind of particles | Crosslinked polystyrene | Amorphous silica | Calcium carbonate |

Table 2-2   (continued)

| | Comparative Examples | | |
|---|---|---|---|
| | 2-1 | 2-2 | 2-3 |
| Average particle diameter (µm) | 1.1 | 2.4 | 1.2 |
| Content of particles (ppm) | 500 | 100 | 2500 |
| Film haze (%) | 3.1 | 0.9 | 1.4 |
| Center line average roughness (Ra: nm) | 16 | 5 | 40 |
| Film winding property (Rank) | B | D | A |
| Heat shrinkage percentage at 130 °C (%) | | | |
| MD | 9.5 | 3.0 | 3.0 |
| TD | 5.3 | 0.3 | 0.3 |

Examples 3-1 to 3-3 and Comparative Examples 3-1 to 3-3:

These Examples and Comparative Examples were conducted for explaining the third aspect of the present invention.

Example 3-1:

<Production of biaxially oriented polyester film>

The polyester A3 and the polyester B3 were mixed with each other at a weight ratio of 4:1, and the resultant mixture was charged into an extruder for a surface layer. Separately, a resin composed of 100 % of the polyester A3 was charged into an extruder for an intermediate layer. Both of the extruders were vented twin-screw extruders, and the resins were used without being dried. The resins were melt-extruded from the respective extruders at 250°C while removing water through a vent port thereof under a vacuum of 1 kPa. Specifically, the molten polymers were passed through a gear pump and a filter disposed in the respective extruders, merged and laminated within a feed block, and then melt-extruded from a T-die, thereby obtaining an unstretched sheet having a three layer structure in which opposite surface layers were composed of the same raw material. In this case, the unstretched sheet was formed such that the thicknesses of the opposite surface layers were identical to each other, and a sum of the thicknesses of the opposite surface layers was 2% of a total thickness of the unstretched sheet. In addition, in this case, the unstretched sheet was cast over a cooling drum maintained at 20°C by using an electrostatic adhesion method. The thus produced unstretched sheet was subjected to a longitudinal stretching process.
First, the longitudinal stretching process was carried out by a roll stretching method. Specifically, the unstretched sheet was preheated to 72°C by a plurality of heating rolls, and then stretched at a stretch ratio of 3.0 times in the longitudinal direction using the heating rolls in combination with an IR heater. Next, the thus obtained monoaxially stretched film was introduced into a tenter, preheated at 100°C, and then stretched at a stretch ratio of 3.3 times in the width direction. Thereafter, in the same tenter, the thus stretched film was heat-set at 185°C under tension and then cooled, thereby obtaining a biaxially oriented polyester film having a total thickness of 188 µm.

<Production of transparent conductive laminate>

On one surface of the above biaxially oriented polyester film was laminated a transparent conductive thin film composed of an indium-tin composite oxide using a DC magnetron sputtering method. As the target, there was used an indium alloy containing 10% by weight of tin. An electric power applied was 2 W/cm$^2$. The transparent conductive thin film was formed under a constant vacuum pressure of 0.4 Pa upon sputtering while introducing a mixed gas composed of Ar: 130 sccm and O$_2$: 70 sccm such that the thickness of the thin film was 30 nm, thereby obtaining a transparent conductive laminate. The properties of the thus obtained transparent conductive laminate are shown in Table 3-1.

Example 3-2:

<Production of biaxially oriented polyester film>

The polyester A3 solely in a non-dried state was charged into a vented twin-screw extruder whose melt line temperature was set to 250°C, and then melt-extruded therefrom. In this case, water was removed under a vacuum of 1 kPa through a vent port of the extruder. Also, the molten resin was extruded into a sheet shape from a T-die through a gear pump and a filter. The thus extruded molten resin (single layer) was cast over a cooling drum maintained at 20°C by using an electrostatic adhesion method. The thus produced unstretched sheet was subjected to a longitudinal stretching process using a roll stretching method. Specifically, the unstretched sheet was preheated to 72°C by a plurality of heating rolls, and then stretched at a stretch ratio of 3.0 times in the longitudinal direction using the heating rolls in combination with an IR heater. At this stage, the following water-based coating agent was applied onto one surface of the obtained film using a reverse coater. The coating agent was applied such that the dried coating amount thereof after biaxial stretching of the film was 0.1 g/cm$^2$.

<Composition of coating agent ("part(s)" represents weight part(s) of respective solid components)>

Coating agent composed of:

20 parts of a water dispersion of a polyester resin produced from 30 mol% of terephthalic acid, 16 mol% of isophthalic acid, 4 mol% of 5-sodiumsulfoisophthalic acid, 35 mol% of ethyleneglycol, 10 mol% of 1,4-butanediol and 5 mol% of diethyleneglycol;
60 parts of "HYDRANE AP-40" (polyester-based polyurethane water dispersion) produced by Dai-Nippon Ink Kagaku Co., Ltd.;
15 parts of a water dispersion of hexamethopxymethyl melamine; and
5 parts of a water dispersion of silica particles (average particle diameter: 0.04 μm).

Next, the thus obtained monoaxially stretched film was introduced into a tenter, dried and preheated at 100°C, and then stretched at a stretch ratio of 3.3 times in the width direction. Thereafter, in the same tenter, the thus stretched film was heat-set at 185°C under tension and then cooled, thereby obtaining a biaxially oriented polyester film having a total thickness of 188 μm.

<Production of transparent conductive laminate>

On the surface of the above biaxially oriented polyester film opposite to the coated surface thereof was laminated a transparent conductive thin film by the same method as defined in Example 3-1, thereby obtaining a transparent conductive laminate. The properties of the thus obtained transparent conductive laminate are shown in Table 3-1.

Comparative Example 3-1:

<Production of biaxially oriented polyester film>

The same procedure for melt extrusion as defined in Example 3-2 was conducted except that a polyethylene terephthalate having an intrinsic viscosity of 0.65 dl/g which was produced by a known continuous polymerization method was used, and the melt line temperature was set to 285°C, thereby obtaining a single layer unstretched sheet. The thus produced unstretched sheet was subjected to a longitudinal stretching process using a roll stretching method. Specifically, the unstretched sheet was preheated to 85°C by a plurality of heating rolls, and then stretched at a stretch ratio of 2.5 times in the longitudinal direction, and further stretched at a stretch ratio of 1.2 times at 95°C in the same direction. At this stage, the same water-based coating agent as used in Example 3-2 was applied onto one surface of the film. Next, the thus obtained monoaxially stretched film was introduced into a tenter, dried and preheated at 120°C, and then stretched at a stretch ratio of 3.3 times in the width direction. Thereafter, in the same tenter, the thus stretched film was heat-set at 225°C under tension and then cooled, thereby obtaining a biaxially oriented polyester film having a total thickness of 188 μm.

<Production of transparent conductive laminate>

On the surface of the above biaxially oriented polyester film opposite to the coated surface thereof was laminated a transparent conductive thin film by the same method as defined in Example 3-1, thereby obtaining a transparent conductive laminate. The properties of the thus obtained transparent conductive laminate are shown in Table 3-1.

Comparative Example 3-2:

The same procedure for melt extrusion as defined in Example 3-2 was conducted except that a raw resin composed of 100% of the polyester C3 was used, thereby obtaining a single layer unstretched sheet. The thus produced unstretched sheet was subjected to longitudinal stretching, coating with the water-based coating agent and lateral stretching by the same method as defined in Example 3-2. Thereafter, the thus stretched film was heat-set at 155°C in the same tenter under tension, and then cooled, thereby obtaining a biaxially oriented polyester film having a total thickness of 188 μm.

<Production of transparent conductive laminate>

On the surface of the above biaxially oriented polyester film opposite to the coated surface thereof was laminated a transparent conductive thin film by the same method as defined in Example 3-1, thereby obtaining a transparent conductive laminate. The properties of the thus obtained transparent conductive laminate are shown in Table 3-1.

## Table 3-1

| | Examples | |
| | 3-1 | 3-2 |
|---|---|---|
| Composition of polyester (%) | | |
| Dicarboxylic acid component (trans isomer fraction) | 1,4-CHDA: 100% (98%) | 1,4-CHDA: 100% (98%) |
| Diol component (trans isomer fraction) | 1,4-CHDM: 100% (67%) | 1,4-CHDM: 100% (67%) |
| Melting point of film (°C) | 220 | 220 |
| Layer structure of film | Laminate (3-layer) | Single |
| Thickness ratio between laminated layers (A/B/A') (%) | 1/98/1 | - |
| Kind of particles: Average particle diameter: Content of particles | | |
| Surface layer (A, A') | Amorphous silica:2.4 μm:200 ppm | No particles |
| Intermediate layer (B) | No particles | |
| Coating layer of film | None | Formed |
| Total light transmittance of film (%) | 91.5 | 91.0 |
| Film haze (%) | 1.2 | 0.8 |
| Change in film haze (%) | | |
| 150°C x 1h (%) | <0.1 | 0.1 |
| 150°C x 4h (%) | <0.1 | 0.2 |
| Shrinkage percentage (%): MD/TD | 2.3/2.5 | 2.3/2.5 |
| Change of transparent conductive laminate after heating (150°C x 1h) | | |
| Appearance | No change | No change |
| Change in haze (%) | <0.1 | 0.1 |
| Change in surface resistivity | 1.04 times | 1.04 times |

Table 3-1 (continued)

|  | Comparative Examples | |
|  | 3-1 | 3-2 |
|---|---|---|
| Composition of polyester (%) | | |
| Dicarboxylic acid component (trans isomer fraction) | TPA:100% (-) | 1,4-CHDA: 100% (77%) |
| Diol component (trans isomer fraction) | EG:100% (-) | 1,4-CHDM: 100% (67%) |
| Melting point of film (°C) | 256 | 192 |
| Layer structure of film | Single | Single |
| Thickness ratio between laminated layers (A/B/A') (%) | - | - |
| Kind of particles: Average particle diameter: Content of particles | | |
| Surface layer (A, A') | No particles | No particles |
| Intermediate layer (B) | | |
| Coating layer of film | Formed | Formed |
| Total light transmittance of film (%) | 87.8 | 91.0 |
| Film haze (%) | 0.8 | 0.8 |
| Change in film haze (%) | | |
| 150°C x 1h (%) | 4.5 | 0.1 |
| 150°C x 4h (%) | 11 | 0.2 |
| Shrinkage percentage (%): MD/TD | 0.9/0.9 | 7.5/7.8 |
| Change of transparent conductive laminate after heating (150°C x 1h) | | |
| Appearance | Turbid/ white spots | No change |
| Change in haze (%) | 3.7 | 0.1 |
| Change in surface resistivity | 1.26 times | 1.05 times |

Examples 4-1 to 4-5 and Comparative Examples 4-1 to 4-3:

These Examples and Comparative Examples were conducted for explaining the fifth aspect of the present invention. Further, a coating solution used in these Examples and Comparative Examples for formation of a coating layer on the surface of the biaxially oriented polyester film was composed of the following components (a) to (f):

<u>\<a: Polyester resin\></u>

A water dispersion of a polyester resin produced from 28 mol% of terephthalic acid, 20 mol% of isophthalic acid, 2 mol% of 5-sodiumsulfoisophthalic acid, 35 mol% of ethyleneglycol, 10 mol% of 1,4-butanediol and 5 mol% of diethyleneglycol

<u>\<b: Acrylic resin\></u>

An emulsion polymer produced from 45 mol% of methyl methacrylate, 45 mol% of ethyl acrylate, 5 mol% of acrylonitrile and 5 mol% of N-methylol methacrylamide (emulsifier: anionic surfactant)

<u>\<c: Polyurethane resin\></u>

"HYDRANE AP-40" (polyester-based polyurethane water dispersion) produced by Dai-Nippon Ink Kagaku Co., Ltd.

<u>\<d: Melamine-based crosslinking agent\></u>

A water dispersion of hexamethoxymethyl melamine

<u>\<e: Oxazoline-based crosslinking agent\></u>

"EPOCROSS WS-500" produced by Nippon Shokubai Co., Ltd. (water dispersion of an acrylic resin containing an oxazoline group as a branched chain)

<u>\<f: Silica particles\></u>

A water dispersion of silica (average particle diameter: 0.06 μm)

<u>Example 4-1:</u>

The polyester A4 and the polyester B4 were mixed with each other at a weight ratio of 4:1. The resultant mixture was charged into a unidirectional rotation-type twin-screw extruder whose melt line temperature was set to 250°C and whose vent port was connected to a vacuum line, and then melt-extruded into a sheet shape from a T-die while removing water therefrom under a vacuum of 1 kPa. The thus extruded molten resin was cast over a cooling drum maintained at 20°C. In this case, the molten resin was adhered onto the surface of the cooling drum by using an electrostatic adhesion method. The thus produced unstretched sheet was subjected to a longitudinal stretching process using a roll stretching method. Specifically, the unstretched sheet was preheated to 70°C by a plurality of ceramic heating rolls, and then stretched at a stretch ratio of 3.0 times in the longitudinal direction using the heating rolls in combination with an IR heater. Next, one surface of the thus obtained monoaxially stretched film was subjected to corona discharge treatment, and then a coating solution having the following composition (weight ratio of solid components):
a/c/d/f = 20/60/17/3 (the respective symbols represent constitutional components of the above coating solution) was applied onto the corona-treated surface of the film. Meanwhile, the coating was performed using a gravure coater and the amount of the coating solution applied was controlled such that the thickness of the finally obtained coating layer was 0.1 μm.
Next, the thus obtained monoaxially stretched film was introduced into a tenter, preheated at 90°C, and then stretched at a stretch ratio of 4.0 times in the width direction. Thereafter, in the same tenter, the thus stretched film was heat-set at 180°C under tension and then relaxed by 3% in the width direction at 150°C, thereby obtaining a 50 μm-thick biaxially oriented polyester film. The properties of the thus obtained film are shown in Table 4-1.

<u>Example 4-2:</u>

The same procedure for melt extrusion as defined in Example 4-1 was conducted except that the polyester C4 and the polyester D4 were mixed with each other at a weight ratio of 4:1, the resultant mixture was charged into the same extruder as used in Example 4-1, and the melt line temperature was set to 270°C, thereby obtaining an unstretched sheet. The thus produced unstretched sheet was subjected to a longitudinal stretching process using a roll stretching method. Specifically, the unstretched sheet was preheated to 75°C by a plurality of ceramic heating rolls, and then stretched at a stretch ratio of 3.0 times in the longitudinal direction using the heating rolls in combination with an IR heater. Next, one surface of the thus obtained monoaxially stretched film was subjected to corona discharge treatment, and then a coating solution having the following same composition (weight ratio of solid components) as that used in Example 4-1:

a/c/d/f = 20/60/17/3

was applied onto the corona-treated surface of the film. Meanwhile, the coating was performed using a gravure coater and the amount of the coating solution applied was controlled such that the thickness of the finally obtained coating layer was 0.1 μm.

Next, the thus obtained monoaxially stretched film was introduced into a tenter, preheated at 95°C, and then stretched at a stretch ratio of 4.0 times in the width direction. Thereafter, in the same tenter, the thus stretched film was heat-set at 210°C under tension and then relaxed by 3% in the width direction at 150°C, thereby obtaining a 50 μm-thick biaxially oriented polyester film. The properties of the thus obtained film are shown in Table 4-1.

Example 4-3:

The same procedure including lateral stretching, heat-setting and relaxation in width direction as defined in Example 4-1 was conducted except that the coating solution was changed to a coating solution having the following composition (weight ratio of solid components):

a/b/d/f = 45/30/22/3,

thereby obtaining a 50 μm-thick biaxially oriented polyester film. The properties of the thus obtained film are shown in Table 4-1.

Example 4-4:

The same procedure including lateral stretching, heat-setting and relaxation in width direction as defined in Example 4-1 was conducted except that the coating solution was changed to a coating solution having the following composition (weight ratio of solid components):

a/b/e/f = 55/30/12/3,

thereby obtaining a 50 μm-thick biaxially oriented polyester film. The properties of the thus obtained film are shown in Table 4-1.

Example 4-5:

The same procedure including lateral stretching, heat-setting and relaxation in width direction as defined in Example 4-1 was conducted except that the coating solution was changed to a coating solution having the following composition (weight ratio of solid components):

a/b/c/d/f = 15/45/15/22/3,

thereby obtaining a 50 μm-thick biaxially oriented polyester film. The properties of the thus obtained film are shown in Table 4-1.

Comparative Example 4-1:

The same procedure including melt extrusion, formation of unstretched sheet, longitudinal stretching, coating with the coating solution, lateral stretching and heat-setting as defined in Example 4-2 was conducted except that a polyethylene terephthalate resin containing 0.02% by weight of amorphous silica having an average particle diameter of 2.4 μm was used, and the melt line temperature upon melt extrusion and the longitudinal stretching temperature were set to 280°C and 83°C, respectively, thereby obtaining a 50 µm-thick biaxially oriented polyester film. The properties of the thus obtained film are shown in Table 4-2.

Comparative Example 4-2:

The same procedure including heat-setting and relaxation in the width direction as defined in Example 4-1 was conducted except that after the longitudinal stretching, neither corona discharge treatment nor coating with the coating solution was conducted, thereby obtaining a 50 µm-thick biaxially oriented polyester film. The properties of the thus obtained film are shown in Table 4-2.

Example 4-3:

The same procedure for melt extrusion as defined in Example 4-1 was conducted except that the polyester E4 and the polyester F4 were mixed with each other at a weight ratio of 4:1, thereby obtaining an unstretched sheet. The thus produced unstretched sheet was subjected to a longitudinal stretching process using a roll stretching method. Specifically, the unstretched sheet was preheated to 55°C by a plurality of ceramic heating rolls, and then stretched at a stretch ratio of 3.0 times in the longitudinal direction using the heating rolls in combination with an IR heater. Next, one surface of the thus obtained monoaxially stretched film was subjected to corona discharge treatment, and then a coating solution having the following same composition (weight ratio of solid components) as used in Example 4-1:

$$a/c/d/f = 20/60/17/3$$

was applied onto the corona-treated surface of the film. Meanwhile, the coating was performed using a gravure coater and the amount of the coating solution applied was controlled such that the thickness of the finally obtained coating layer was 0.1 µm.

Next, the thus obtained monoaxially stretched film was introduced into a tenter, preheated at 70°C, and then stretched at a stretch ratio of 4.0 times in the width direction. Thereafter, in the same tenter, the thus stretched film was heat-set at 150°C under tension and then relaxed by 3% in the width direction at 130°C, thereby obtaining a 50 µm-thick biaxially oriented polyester film. The properties of the thus obtained film are shown in Table 4-2.

Table 4-1

| | Examples | | | |
|---|---|---|---|---|
| | 4-1 | 4-2 | 4-3 | 4-4 |
| Composition of polyester (%) | | | | |
| Dicarboxylic acid component (trans isomer fraction) | 1,4-CHDA, 100% (98%) | 1,4-CHDA, 100% (98%) | 1,4-CHDA, 100% (98%) | 1,4-CHDA, 100% (98%) |
| Diol component (trans isomer fraction) | 1,4-CHDM, 100% (67%) | 1,4-CHDM, 100% (100%) | 1,4-CHDA, 100% (67%) | 1,4-CHDA, 100% (67%) |
| Melting point of film (°C) | 220 | 242 | 220 | 220 |
| Total light transmittance (%) | 90.9 | 90.9 | 91.1 | 91.2 |
| Component of coating layer (%) | | | | |
| Polyester resin (a) | 20 | 20 | 45 | 55 |
| Acrylic resin (b) | - | - | 30 | 30 |
| Polyurethane resin (c) | 60 | 60 | - | - |

Table 4-1   (continued)

| | Examples | | | |
|---|---|---|---|---|
| | 4-1 | 4-2 | 4-3 | 4-4 |
| Melamine-based crosslinking agent (d) | 17 | 17 | 22 | - |
| Oxazoline-based crosslinking agent (e) | - | - | - | 12 |
| Silica particles (f) | 3 | 3 | 3 | 3 |
| Adhesion strength to hard coat | ◎ | ◎ | ◎ | O |
| Heat shrinkage percentage at 130 °C (%) | | | | |
| MD | 3.3 | 3.1 | 3.3 | 3.3 |
| TD | 0.4 | 0.3 | 0.4 | 0.4 |

Table 4-2

| | Example | Comparative examples | | |
|---|---|---|---|---|
| | 4-5 | 4-1 | 4-2 | 4-3 |
| Composition of polyester (%) | | | | |
| Dicarboxylic acid component (trans isomer fraction) | 1,4-CHDA: 100% (98%) | TPA : 100% (-) | 1,4-CHDA : 100% (98%) | 1,4-CHDA : 100% (77%) |
| Diol component (trans isomer fraction) | 1,4-CHDM: 100% (67%) | EG: 100% (-) | 1,4-CHDM : 100% (67%) | 1,4-CHDM : 100% (67%) |
| Melting point of film (°C) | 220 | 256 | 220 | 192 |
| Total light transmittance (%) | 91.2 | 87.4 | 91.5 | 90.2 |
| Component of coating layer (%) | | | | |
| Polyester resin (a) | 15 | 20 | - | 20 |
| Acrylic resin (b) | 45 | - | - | - |
| Polyurethane resin (c) | 15 | 60 | - | 60 |
| Melamine-based crosslinking agent (d) | 22 | 17 | - | 17 |
| Oxazoline-based crosslinking agent (e) | - | - | - | - |
| Silica particles (f) | 3 | 3 | - | 3 |

Table 4-2  (continued)

| | Example | Comparative examples | | |
|---|---|---|---|---|
| | 4-5 | 4-1 | 4-2 | 4-3 |
| Adhesion strength to hard coat | ◎ | ◎ | × | O |
| Heat shrinkage percentage at 130 °C (%) | | | | |
| MD | 3.3 | 2.9 | 3.3 | 10.5 |
| TD | 0.4 | 0.3 | 0.4 | 6.9 |

Examples 5-1 to 5-3 and Comparative Examples 5-1 to 5-3:

These Examples and Comparative Examples were conducted for explaining the fifth aspect of the present invention.

Example 5-1:

The polyester A5 and the polyester B5 were mixed with each other at a weight ratio of 4:1, and the resultant mixture was charged into an extruder for a surface layer. Separately, a resin composed of 100 % of the polyester A5 was charged into an extruder for an intermediate layer. Both of the extruders were vented twin-screw extruders, and the resins were used without being dried. The resins were melt-extruded from the respective extruders at 250°C while removing water from a vent port thereof under a vacuum of 1 kPa. Specifically, the molten polymers were passed through a gear pump and a filter disposed in the respective extruders, merged and laminated within a feed block, and then melt-extruded from a T-die, thereby obtaining an unstretched sheet having a three layer structure in which opposite surface layers were composed of the same raw material. In this case, the unstretched sheet was formed such that the thicknesses of the opposite surface layers were identical to each other, and a sum of the thicknesses of the opposite surface layers was 10% of a total thickness of the unstretched sheet. In addition, in this case, the unstretched sheet was cast over a cooling drum maintained at 20°C by using an electrostatic adhesion method. The thus produced unstretched sheet was subjected to a longitudinal stretching process.
First, the longitudinal stretching process was carried out by a roll stretching method. Specifically, the unstretched sheet was preheated to 70°C by a plurality of heating rolls, and then stretched at a stretch ratio of 3.0 times in the longitudinal direction using the heating rolls in combination with an IR heater. Then, both surfaces of the thus obtained monoaxially stretched film was subjected to corona discharge treatment, and then a coating solution having the following composition 1 for coating layer was applied onto both surface of the film. The coating was performed by a bar coating method such that the coating amounts on both surfaces of the finally obtained biaxially oriented film were respectively 0.1 g/m$^2$. Next, the thus obtained monoaxially stretched film was introduced into a tenter, dried and preheated at 95°C, and then stretched at a stretch ratio of 3.8 times in the width direction. Thereafter, in the same tenter, the thus stretched film was heat-set at 185°C under tension and then relaxed by 3% in the width direction at 150°C, thereby obtaining a biaxially oriented polyester film having a total thickness of 100 μm. The properties of the thus obtained film are shown in Table 5-1.

<Composition 1 for coating layer (weight parts calculated as solid contents)>

Water dispersion of a hydrochloride of polypyrrolidium resin: 40 parts by weight
Water dispersion of polyacrylic resin: 40 parts by weight (water dispersion of copolymerized acrylic resin having a self-crosslinking property and containing methyl methacrylate as a main component, and N-methylol acrylamide)
Water dispersion of methoxymethylol melamine: 17 parts by weight
Water dispersion of colloidal silica (average particle diameter: 0.04 μm) : 3 parts by weight

Example 5-2:

A resin composed of 100 % of the polyester A5 in a non-dried state was charged into a vented twin-screw extruder, and then melt-extruded therefrom by setting the melt line temperature to 250°C. Upon the melt extrusion, a vent port of the extruder was connected to a vacuum line, and the melt extrusion was conducted while removing water under a vacuum of 1 kPa such that the molten resin was extruded into a sheet shape from a T-die through a gear pump and a filter. The thus extruded sheet (single layer) was cast over a cooling drum maintained at 20°C by using an electrostatic adhesion method. The thus produced unstretched sheet was subjected to a longitudinal stretching process.

First, the longitudinal stretching process was carried out by a roll stretching method. Specifically, the unstretched sheet was preheated to 70°C by a plurality of heating rolls, and then stretched at a stretch ratio of 3.0 times in the longitudinal direction using the heating rolls in combination with an IR heater. Then, both surfaces of the thus obtained monoaxially stretched film was subjected to corona discharge treatment, and then a coating solution having the following composition 2 for coating layer was applied onto both surface of the film. The coating was performed by a bar coating method such that the coating amounts on both surfaces of the finally obtained biaxially oriented film were respectively 0.1 g/m$^2$. Next, the thus obtained monoaxially stretched film was introduced into a tenter, dried and preheated at 95°C, and then stretched at a stretch ratio of 3.8 times in the width direction. Thereafter, in the same tenter, the thus stretched film was heat-set at 185°C under tension and then relaxed by 3% in the width direction at 150°C, thereby obtaining a biaxially oriented polyester film having a total thickness of 100 μm. The properties of the thus obtained film are shown in Table 5-1.

<Composition 2 for coating layer (weight parts calculated as solid contents)>

Water dispersion of polyurethane-based resin: 35 parts by weight (water dispersion of polyurethane mainly containing isophorone diisocyanate as an isocyanate component, a polyester polyol constituted from terephthalic acid, isophthalic acid, ethyleneglycol and diethyleneglycol as a polyol component, and 2,2-dimethylolpropionic acid as a chain transfer)

Water dispersion of sodium styrenesulfonate-copolymerized acrylic resin: 30 parts by weight (water dispersion of antistatic resin obtained by copolymerizing sodium p-styrenesulfonate, sodium methacrylic sulfonate and N,N-dimethylaminoethyl methacrylate as main components)

Water dispersion of polyester resin: 15 parts by weight (water dispersion of copolyester containing a dicarboxylic acid component composed of terephthalic acid, isophthalic acid and 5-sodiumsulfonylisophthalic acid, and a diol component composed of ethyleneglycol and diethyleneglycol)

Water dispersion of methoxymethylol melamine: 15 parts by weight

Water dispersion of colloidal silica (average particle diameter: 0.04 μm): 5 parts by weight

Example 5-3:

The same procedure for melt extrusion as defined in Example 5-1 was conducted except that the polyester A5 and the polyester C5 were mixed with each other at a weight ratio of 1:1 and the resultant mixture was charged into an extruder for a surface layer, and separately a resin composed of 100% of the polyester A5 was charged into an extruder for an intermediate layer, thereby obtaining an unstretched sheet having a three layer structure. The thus produced unstretched sheet was subjected to longitudinal stretching, coating treatment of both surfaces with the coating solution, lateral stretching and heat-setting by the same method as in Example 5-1, thereby obtaining a biaxially oriented polyester film having a total thickness of 100 μm. The properties of the thus obtained film are shown in Table 5-1.

Comparative Example 5-1:

The same procedure for melt extrusion as defined in Example 5-1 was conducted except that the polyester D5 and the polyester E5 were mixed with each other at a weight ratio of 1:1 and the resultant mixture was charged into an extruder for a surface layer, and separately a resin composed of 100% of the polyester D5 was charged into an extruder for an intermediate layer, thereby obtaining a single layer unstretched sheet. The thus produced unstretched sheet was subjected to longitudinal stretching, coating treatment of both surfaces with the coating solution and lateral stretching by the same method as in Example 5-1. Thereafter, in the same tenter, the thus stretched film was heat-set at 150°C under tension and then relaxed by 3% in the width direction at 130°C, thereby obtaining a biaxially oriented polyester film having a total thickness of 100 μm. The properties of the thus obtained film are shown in Table 5-2.

Comparative Example 5-2:

Formation of an unstretched sheet and longitudinal stretching thereof were conducted by the same method as defined in Example 5-2, thereby obtaining a monoaxially stretched film. Then, both surfaces of the thus obtained monoaxially stretched film were subjected to corona discharge treatment, and then a coating solution having the following composition 3 for coating layer was applied onto both surface of the film. The coating was performed by a bar coating method such that the coating amounts on both surfaces of the finally obtained biaxially oriented film were respectively 0.1 g/m$^2$. Thereafter, the film was subjected to lateral stretching and heat-setting by the same method as defined in Example 5-2, thereby obtaining a biaxially oriented polyester film having a total thickness of 100 μm. The properties of the thus obtained film are shown in Table 5-2.

<Composition 3 for coating layer (weight parts calculated as respective solid contents)>

Water dispersion of polyurethane-based resin: 55 parts by weight (the same water dispersion of polyurethane-based resin as used in the composition 2 for coating layer)
Water dispersion of polyester resin: 25 parts by weight (the same water dispersion of polyester resin as used in the composition 2 for coating layer)
Water dispersion of methoxymethylol melamine: 15 parts by weight
Water dispersion of colloidal silica (average particle diameter: 0.04 μm): 5 parts by weight

Comparative Example 5-3:

The same procedure as defined in Example 5-1 was conducted except that the heat-setting temperature and the relaxation treatment temperature were changed to 150°C and 130°C, respectively, thereby obtaining a biaxially oriented polyester film having a total thickness of 100 μm. The properties of the thus obtained film are shown in Table 5-2.

Table 5-1

| | Examples | | |
|---|---|---|---|
| | 5-1 | 5-2 | 5-3 |
| Composition of polyester (%) | | | |
| Dicarboxylic acid component (trans isomer fraction) | 1,4-CHDA : 100% (98%) | 1,4-CHDA : 100% (98%) | 1,4-CHDA : 100% (98%) |
| Diol component (trans isomer fraction) | 1,4-CHDM : 100% (67%) | 1,4-CHDM : 100% (67%) | 1,4-CHDM : 100% (67%) |
| Melting point of film (°C) | 220 | 220 | 220 |
| Layer structure of film | Laminate (3-layered) | Single | Laminate (3-layered) |
| Formation of coating layer | Formed (on both surfaces) | Formed (on both surfaces) | Formed (on both surfaces) |
| Surface resistivity of coating layer (Ω) | $1.1 \times 10^{10}$ | $2.1 \times 10^{11}$ | $1.1 \times 10^{10}$ |
| Easiness of contamination of film surface | O | O | O |
| Film haze (%) | 1.3 | 1.0 | 2.9 |
| Adhesion strength to hard coat | ◎ | ◎ | ◎ |
| Surface resistivity of hard coat layer (Ω) | $4.3 \times 10^{30}$ | $3.5 \times 10^{13}$ | $4.3 \times 10^{10}$ |
| Shrinkage percentage (%) (130°Cx10min) | | | |
| MD | 2.3 | 2.3 | 2.3 |
| TD | 0.3 | 0.3 | 0.3 |

Table 5-2

| | Comparative Examples | | |
|---|---|---|---|
| | 5-1 | 5-2 | 5-3 |
| Composition of polyester (%) | | | |
| Dicarboxylic acid component (trans isomer fraction) | 1,4-CHDA : 100% (77%) | 1,4-CHDA : 100% (98%) | 1,4-CHDA : 100% (98%) |
| Diol component (trans isomer fraction) | 1,4-CHDM : 100% (67%) | 1,4-CHDM : 100% (67%) | 1,4-CHDM : 100% (67%) |
| Melting point of film (°C) | 192 | 220 | 220 |
| Layer structure of film | Laminate (3-layered) | Single | Laminate (3-layered) |
| Formation of coating layer | Formed (on both surfaces) | Formed (on both surfaces) | Formed (on both surfaces) |
| Surface resistivity of coating layer (Ω) | $1.3 \times 10^{10}$ | $>1 \times 10^{15}$ | $1.4 \times 10^{10}$ |
| Easiness of contamination of film surface | O | × | O |
| Film haze (%) | 1.3 | 1.0 | 1.3 |
| Adhesion strength to hard coat | Δ | ◎ | Δ |
| Surface resistivity of hard coat layer (Ω) | $4.9 \times 10^{10}$ | $>1 \times 10^{15}$ | $4.9 \times 10^{10}$ |
| Shrinkage percentage (%) (130°Cx10min) | | | |
| MD | 7.8 | 2.3 | 6.6 |
| TD | 5.1 | 0.3 | 3.9 |

Examples 6-1 to 6-3 and Comparative Examples 6-1 and 6-2:

These Examples and Comparative Examples were conducted for explaining the sixth aspect of the present invention.

Example 6-1:

<Production of biaxially oriented polyester film>

The polyester A6 and the polyester B6 were mixed with each other at a weight ratio of 1:1, and the resultant mixture was charged into an extruder for a surface layer. Separately, a resin composed of 100 % of the polyester A6 was charged into an extruder for an intermediate layer. Both of the extruders were vented twin-screw extruders, and the resins were used without being dried. The resins were melt-extruded from the respective extruders at 250°C while removing water from a vent port thereof under a vacuum of 1 kPa. Specifically, the molten polymers were passed through a gear pump and a filter disposed in the respective extruders, merged and laminated within a feed block, and then melt-extruded from a T-die, thereby obtaining an unstretched sheet having a three layer structure in which opposite surface layers were composed of the same raw material. In this case, the unstretched sheet was formed such that the thicknesses of the opposite surface layers were identical to each other, and a sum of the thicknesses of the opposite surface layers was 10% of a total thickness of the unstretched sheet. In addition, in this case, the unstretched sheet was cast over a cooling drum maintained at 20°C by using an electrostatic adhesion method. The thus produced unstretched sheet was then subjected to a longitudinal stretching process.

First, the longitudinal stretching process was carried out by a roll stretching method. Specifically, the unstretched sheet was preheated to 70°C by a plurality of heating rolls, and then stretched at a stretch ratio of 3.0 times in the longitudinal direction using the heating rolls in combination with an IR heater. Next, the thus obtained monoaxially stretched film was introduced into a tenter, preheated at 85°C, and then stretched at a stretch ratio of 4.0 times in the width direction. Thereafter, in the same tenter, the thus stretched film was heat-set at 180°C under tension and then relaxed by 3% in the width direction at 150°C, thereby obtaining a biaxially oriented polyester film having a total thickness of 38 μm.

<Production of release film>

One surface of the above obtained biaxially oriented polyester film was coated with an addition-reactive curing release agent having the following composition such that the coating amount thereof after drying and curing was 0.1 $g/m^2$, and then dried and cured, thereby forming a release layer thereon. The properties of the thus obtained release film are shown in Table 6-1.

<Composition of curing release agent>

Curing-type silicone resin ("KS-847H" produced by Shin-Etsu Kagaku Co., Ltd.): 100 parts by weight
Curing agent ("PL-50T" produced by Shin-Etsu Kagaku Co., Ltd.): 1 part by weight
Mixed solvent of MEK and Toluene: 1500 parts by weight

Example 6-2:

<Production of biaxially oriented polyester film>

The polyester A6 and the polyester C6 were mixed with each other at a weight ratio of 1:1 and used as a raw material. The obtained raw resin mixture was charged without drying into a vented twin-screw extruder, and then melt-extruded therefrom by setting the melt line temperature to 250°C. Upon the melt extrusion, a vent port of the extruder was connected to a vacuum line, and the melt extrusion was conducted while removing water under a vacuum of 1 kPa such that the molten resin was extruded into a sheet shape from a T-die through a gear pump and a filter. The thus extruded sheet (single layer) was cast over a cooling drum maintained at 20°C by using an electrostatic adhesion method. The thus produced unstretched sheet was successively subjected to longitudinal stretching, lateral stretching and heat-setting by the same method as defined in Example 6-1, thereby obtaining a biaxially oriented polyester film having a total thickness of 38 μm.

<Production of release film>

A release layer was formed on one surface of the thus obtained biaxially oriented polyester film by the same method as defined in Example 6-1. The properties of the thus obtained release film are shown in Table 6-1.

Example 6-3:

<Production of biaxially oriented polyester film>

The same biaxially oriented polyester film having a total thickness of 38 μm as produced in Example 6-1 was used.

<Production of release film>

One surface of the above obtained biaxially oriented polyester film was coated with an condensation-reactive curing release agent having the following composition such that the coating amount thereof after drying and curing was 0.1 $g/m^2$, and then dried and cured, thereby forming a release layer thereon. The properties of the thus obtained release film are shown in Table 6-1.

<Composition of curing release agent>

Curing-type silicone resin ("KS-723A" produced by Shin-Etsu Kagaku Co., Ltd.): 100 parts by weight
Curing-type silicone resin ("KS-723B" produced by Shin-Etsu Kagaku Co., Ltd.): 25 part by weight

Curing agent ("PS-3" produced by Shin-Etsu Kagaku Co., Ltd.): 5 part by weight

Mixed solvent of MEK and Toluene: 1500 parts by weight

Comparative Example 6-1:

<Production of biaxially oriented polyester film>

Polyethylene terephthalate resin pellets (intrinsic viscosity: 0.64 dl/g) containing 0.05% by weight of amorphous silica having an average particle diameter of 2.4 μm were charged into an extruder for a surface layer. Separately, polyethylene terephthalate resin pellets (intrinsic viscosity: 0.64 dl/g) containing no fine particles were charged into an extruder for an intermediate layer. Then, the resins were melt-extruded by the same method as defined in Example 6-1 except that the melt line temperature was changed to 285°C, thereby obtaining an unstretched sheet having a three layer structure. The thus produced unstretched sheet was then subjected to a longitudinal stretching process.

First, the longitudinal stretching process was carried out by a roll stretching method. Specifically, the unstretched sheet was preheated to 83°C by a plurality of heating rolls, and then stretched at a stretch ratio of 3.0 times in the longitudinal direction using the heating rolls in combination with an IR heater. Next, the thus obtained monoaxially stretched film was introduced into a tenter, preheated at 90°C, and then stretched at a stretch ratio of 4.0 times in the width direction. Thereafter, in the same tenter, the thus stretched film was heat-set at 220°C under tension and then relaxed by 3% in the width direction at 150°C, thereby obtaining a biaxially oriented polyester film having a total thickness of 38 μm.

<Production of release film>

A release layer was formed on one surface of the obtained biaxially oriented polyester film by the same method as defined in Example 6-1. The properties of the thus obtained release film are shown in Table 6-1.

Comparative Example 6-2:

The polyester D6 and the polyester E6 were mixed with each other at a weight ratio of 1:1, and the resultant raw resin was charged into an extruder for a surface layer. Separately, a resin composed of 100 % of the polyester D6 was charged into an extruder for an intermediate layer. The resins were melt-extruded by the same method as defined in Example 6-1, thereby obtaining a single layer unstretched sheet. Then, the thus produced unstretched sheet was successively subjected to longitudinal stretching and lateral stretching by the same method as defined in Example 6-1. Thereafter, in the same tenter, the thus stretched film was heat-set at 150°C under tension and then relaxed by 3% in the width direction at 130°C, thereby obtaining a biaxially oriented polyester film having a total thickness of 38 μm. The properties of the thus obtained film are shown in Table 6-1.

<Production of release film>

A release layer was formed on one surface of the obtained biaxially oriented polyester film by the same method as defined in Example 6-1. The properties of the thus obtained release film are shown in Table 6-1.

Table 6-1

| | Examples | | |
|---|---|---|---|
| | 6-1 | 6-2 | 6-3 |
| Composition of polyester (%) | | | |
| Dicarboxylic acid component (trans isomer fraction) | 1,4-CHDA: 100% (98%) | 1,4-CHDA: 100% (98%) | 1,4-CHDA: 100% (98%) |
| Diol component (trans isomer fraction) | 1,4-CHDM: 100% (67%) | 1,4-CHDM: 100% (67%) | 1,4-CHDM: 100% (67%) |
| Melting point of film (°C) | 220 | 220 | 220 |
| Layer structure of film | Laminate (3-layer) | Single | Laminate (3-layer) |
| Thickness ratio between laminated layers (A/B/A') (%) | 5/90/5 | – | 5/90/5 |
| Kind of particles: Average particle diameter ($\mu$m): Content of particles (ppm) | | | |
| Surface layer (A, A') | Amorphous silica:2.4 $\mu$m:500 ppm | Cross-linked poly-styrene: 1.1 $\mu$m:500 ppm | Amorphous silica:2.4 $\mu$m:500 ppm |
| Intermediate layer (B) | No particles | | No particles |
| Release layer (kind) | One surface (silicone -based) | One surface (silicone -based) | One surface (silicone -based) |
| Residual adhesion percentage of release layer (%) | 95 | 90 | 95 |
| Total light transmittance of release film (%) | 91.6 | 91.5 | 91.6 |
| Haze of release film (%) | 1.2 | 1.6 | 1.2 |
| Shrinkage percentage of release film (%) (130°C x 10min) | | | |
| MD | 2.4 | 2.4 | 2.4 |
| TD | 0.2 | 0.2 | 0.2 |
| Change of release film after heating (150°C x 1h) | | | |
| Appearance | No change | No change | No change |
| Change in haze (%) | <0.1 | <0.1 | <0.1 |
| Degree of contamination of adhesive layer | No change | No change | No change |

## Table 6-1 (continued)

|  | Comparative Examples | |
|---|---|---|
|  | 6-1 | 6-2 |
| Composition of polyester (%) |  |  |
| Dicarboxylic acid component (trans isomer fraction) | TPA:100% (-) | 1,4-CHDA: 100% (77%) |
| Diol component (trans isomer fraction) | EG:100% (-) | 1,4-CHDM: 100% (67%) |
| Melting point of film (°C) | 256 | 192 |
| Layer structure of film | Laminate (3-layer) | Laminate (3-layer) |
| Thickness ratio between laminated layers (A/B/A') (%) | 5/90/5 | 5/90/5 |
| Kind of particles: Average particle diameter ($\mu$m): Content of particles (ppm) |  |  |
| Surface layer (A, A') | Amorphous silica:2.4 $\mu$m:500 ppm | Amorphous silica:2.4 $\mu$m:500 ppm |
| Intermediate layer (B) | No particles | No particles |
| Release layer (kind) | One surface (silicone-based) | One surface (silicone-based) |
| Residual adhesion percentage of release layer (%) | 95 | 95 |
| Total light transmittance of release film (%) | 89.5 | 91.6 |
| Haze of release film (%) | 1.2 | 1.1 |
| Shrinkage percentage of release film (%) (130°C x 10min) |  |  |
| MD | 0.9 | 8.2 |
| TD | 0.0 | 5.3 |
| Change of release film after heating (150°C x 1h) |  |  |
| Appearance | Turbid/ white spots | No change |
| Change in haze (%) | 4.2 | <0.1 |
| Degree of contamination of adhesive layer | White powder attached | No change |

INDUSTRIAL APPLICABILITY

The biaxially oriented polyester films according to the respective aspects of the present invention are excellent in heat resistance notwithstanding these films are composed of an aliphatic polyester, and exhibit a good transparency.

(1) Further, the biaxially oriented polyester film according to a preferred embodiment of the first aspect of the present invention is also enhanced in adhesion strength to a hard coat layer formed thereon and, therefore, extremely useful, in particular, in optical applications requiring a high transparency such as films for touch panels, films for various displays, etc.

(2) Further, the biaxially oriented polyester film according to the second aspect of the present invention is excellent in running workability upon production and treatments thereof and, therefore, suitably used, in particular, in optical applications such as films for touch panels, films for various displays, etc.

(3) Further, the biaxially oriented polyester film according to the third aspect of the present invention is free from increase in haze due to generation of oligomers (such as cyclic trimers) even when heated for a long period of time. Consequently, a transparent conductive laminate produced by laminating a transparent conductive thin film on the polyester film is free from defects such as increase in haze, defects of appearance and deterioration in conductivity even after being heat-treated for a long period of time upon various subsequent treatments and, therefore, extremely useful, in particular, in optical applications requiring a high transparency such as films for touch panels, films for electroluminescent panel displays, etc.

(4) Further, the biaxially oriented polyester film according to the fourth aspect of the present invention exhibits a good adhesion strength to a hard coat layer formed thereon and, therefore, is extremely useful, in particular, in optical applications requiring a high transparency such as films for touch panels, films for various displays, etc.

(5) Further, the biaxially oriented polyester film according to the fifth aspect of the present invention is provided thereon with a coating layer having a good antistatic property, so that the surface of the film can be effectively prevented from being contaminated with dusts and dirt due to electrostatic charges. Also, since the coating layer has a good adhesion strength to a hard coat layer formed thereon and the film including the coating layer also exhibits a good transparency, the biaxially oriented polyester film is usefully used in various optical applications.

(6) Further, the release film according to the sixth aspect of the present invention is substantially free from increase in haze due to generation of oligomers upon heating unlike conventional release films using a polyethylene terephthalate film as a base film. Therefore, for example, in the case where the release film used as a protective film for an adhesive layer of a polarizing plate or a phase difference plate is subsequently subjected to various heat treatments and then a release layer thereof is peeled off, it is possible to prevent occurrence of various defects of appearance such as increase in haze of the adhesive layer or formation of white spots due to transfer or migration of oligomers thereto, etc.

**Claims**

1. A biaxially oriented polyester film comprising a polyester which contains repeating units containing 1,4-cyclohexanedicarboxylic acid and 1,4-cyclohexanedimethanol as main components, and exhibits a melting point of not less than 200°C, which biaxially oriented polyester film has a heat shrinkage percentage of not more than 5% as measured at 130°C in each of longitudinal and width directions thereof, and a total light transmittance of not less than 90%.

2. A biaxially oriented polyester film according to claim 1, wherein at least one surface of the biaxially oriented polyester film has a wetting index of not less than 48 mN/m.

3. A biaxially oriented polyester film according to claim 2, wherein said at least one surface having a wetting index of not less than 48 mN/m is provided thereon with a hard coat layer.

4. A biaxially oriented polyester film comprising a polyester which contains repeating units containing 1,4-cyclohexanedicarboxylic acid and 1,4-cyclohexanedimethanol as main components, and exhibits a melting point of not less than 200°C, which biaxially oriented polyester film has a haze of not more than 10%, and in which at least one surface of the biaxially oriented polyester film has a center line average roughness (Ra) of 7 to 35 nm.

5. A biaxially oriented polyester film according to claim 4, wherein the biaxially oriented polyester film has at least three-layered laminated structure obtained by co-extrusion method.

6.  A biaxially oriented polyester film according to claim 5, wherein an intermediate layer of the laminated film contains particles in an amount not more than 1/2 time that of particles contained in surface layers thereof.

7.  A biaxially oriented polyester film for transparent conductive laminates comprising a polyester which contains repeating units containing 1,4-cyclohexanedicarboxylic acid and 1,4-cyclohexanedimethanol as main components, and exhibits a melting point of not less than 200°C, which biaxially oriented polyester film exhibits an amount of change in haze of not more than 1% as measured after heating the film at 150°C for each of 1 hour and 4 hours.

8.  A biaxially oriented polyester film comprising a polyester which contains repeating units containing 1,4-cyclohexanedicarboxylic acid and 1,4-cyclohexanedimethanol as main components, and exhibits a melting point of not less than 200°C, which biaxially oriented polyester film is provided on at least one surface thereof with a coating layer containing at least one resin selected from the group consisting of a polyester resin, an acrylic resin and a polyurethane resin, and in which the whole biaxially oriented polyester film including the coating layer has a total light transmittance of not less than 89%.

9.  A biaxially oriented polyester film according to claim 8, wherein the coating layer is produced during a film-forming process.

10. A biaxially oriented polyester film according to claim 8 or 9, wherein the biaxially oriented polyester film is further provided on a surface of the coating layer thereof with a hard coat layer.

11. A biaxially oriented polyester film comprising a polyester which contains repeating units containing 1,4-cyclohexanedicarboxylic acid and 1,4-cyclohexanedimethanol as main components, and exhibits a melting point of not less than 200°C, which biaxially oriented polyester film is provided on at least one surface thereof with a coating layer having a surface resistivity of not more than $1 \times 10^{13}$ Ω, and has a heat shrinkage percentage of not more than 5% as measured at 130°C in each of longitudinal and width directions thereof.

12. A release film comprising:

    a biaxially oriented polyester film comprising a polyester which contains repeating units containing 1,4-cyclohexanedicarboxylic acid and 1,4-cyclohexanedimethanol as main components, and exhibits a melting point of not less than 200°C; and
    a release layer laminated on at least one surface of the biaxially oriented polyester film,
    said release film having an amount of change in haze of not more than 1% as measured after heating the film at 150°C for 1 hour.

**INTERNATIONAL SEARCH REPORT**

| International application No. |
| --- |
| PCT/JP2004/001529 |

A. CLASSIFICATION OF SUBJECT MATTER
Int.Cl$^7$ C08J5/18, C08J7/04, B29C55/12, B32B27/36, G02B1/04//
G02F1/1335, C08L67:00, B29K67:00, B29L11:00

According to International Patent Classification (IPC) or to both national classification and IPC

B. FIELDS SEARCHED

Minimum documentation searched (classification system followed by classification symbols)
Int.Cl$^7$ C08J5/18, C08J7/04, B29C55/12, B32B27/36, G02B1/04,
G02F1/1335, C08L67/00

Documentation searched other than minimum documentation to the extent that such documents are included in the fields searched
| Jitsuyo Shinan Koho | 1926–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)
CA, REGISTRY(STN)

C. DOCUMENTS CONSIDERED TO BE RELEVANT

| Category* | Citation of document, with indication, where appropriate, of the relevant passages | Relevant to claim No. |
| --- | --- | --- |
| A | JP 2000-290356 A (Kuraray Co., Ltd.), 17 October, 2000 (17.10.00), Claims; page 3, Par. No. [0018] (Family: none) | 1-12 |
| A | US 2002/0165327 A1 (GE Plastic), 07 November, 2002 (07.11.02), Claims; page 4, Par. Nos. [0046] to [0047]; page 5, Par. Nos. [0074] to [0075] (Family: none) | 1-12 |
| A | JP 07-171938 A (Diafoil Hoechst Co., Ltd.), 11 July, 1995 (11.07.95), Claims; page 3, Par. No. [0010]; page 4, Par. No. [0015]; page 5, tables 1, 2 (Family: none) | 2,11 |

| ☒ Further documents are listed in the continuation of Box C. | ☐ See patent family annex. |

| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 12 March, 2004 (12.03.04) | Date of mailing of the international search report 30 March, 2004 (30.03.04) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP2004/001529

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-212317 A (Teijin Ltd.),<br>31 July, 2002 (31.07.02),<br>Claims; page 4, Par. No. [0030]; page 6,<br>Par. No. [0047]; page 7, Par. Nos. [0059]<br>to [0061]; page 10, table 2<br>(Family: none) | 3,4,10 |
| A | JP 2001-261856 A (Toray Industries, Inc.),<br>26 September, 2001 (26.09.01),<br>Claims, page 5, Par. Nos. [0029], [0034];<br>pages 9, 10, tables 1, 2<br>(Family: none) | 5,6,8,9 |
| A | JP 2002-249609 A (Toyobo Co., Ltd.),<br>06 September, 2002 (06.09.02),<br>Claims; page 6, Par. No. [0041]; pages 22 to 23,<br>Par. Nos. [0249] to [0253]<br>(Family: none) | 7,12 |
| A | WO 01/96451 A1 (Teijin Ltd.),<br>20 December, 2001 (20.12.01),<br>Claims; page 6, lines 8 to 20; page 7, lines<br>8 to 18; page 8, line 23 to page 9, line 3<br>& EP 1293532 A1<br>page 4, Par. Nos. [0024] to [0025]; page 5,<br>Par. Nos. [0028] to [0029]; page 6, Par. Nos.<br>[0036] to [0037]<br>& JP 2002-080621 A     & KR 2002029377 A<br>& US 2002/0146518 A1 | 1,8,9 |
| P,A | JP 2003-176401 A (GE Plastics Japan Ltd.),<br>24 June, 2003 (24.06.03),<br>Claims; page 6, Par. Nos. [0045] to [0046]<br>(Family: none) | 1-12 |

Form PCT/ISA/210 (continuation of second sheet) (July 1998)